# FASCICULE DE BREVET EUROPEEN

(11) **EP 1 987 280 B1**
(45) Date de publication et mention de la délivrance du brevet: **22.07.2009**
(21) Numéro de dépôt: 07731578.6
(22) Date de dépôt: 06.02.2007
(51) Int. Cl.: F16L 13/02, F16L 59/147, F16L 9/18

(54) **ELEMENT DE CONDUITES COAXIALES ET PROCEDE DE FABRICATION**
ELEMENT MIT KOAXIALRÖHREN UND HERSTELLUNGSVERFAHREN DAFÜR
ELEMENT COMPRISING COAXIAL PIPES AND PRODUCTION METHOD THEREOF

(30) Priorité: 24.02.2006 FR 0601603
(43) Date de publication de la demande: 05.11.2008
(73) Titulaire: Saipem SA, 78180 Montigny-le-Bretonneux (FR)
(72) Inventeur: BAYLOT, Michel, F-13008 Marseille (FR); GOALABRE, Jean-Yves, F-13008 Marseille (FR); PIONETTI, François-Régis, F-50450 La Baleine (FR)
(74) Mandataire: Domange, Maxime
(86) Numéro de dépôt international: PCT/FR2007/050752
(87) Numéro de publication internationale: WO 2007/096547

(56) Documents cités:
- DE-A1- 2 647 782
- FR-A- 2 873 427
- FR-A- 2 878 936
- MOLLISON M I: "FOAM INSULATION GETS FIRST REELED INSTALLATION OFF AUSTRALIA" 18 mai 1992 (1992-05-18), OIL AND GAS JOURNAL, PENNWELL, HOUSTON, TX, US, PAGE(S) 80-82 , XP000270952 ISSN: 0030-1388 figure 1

## Description

La présente invention concerne un procédé de fabrication d'un élément unitaire d'ensemble de conduites coaxiales, notamment des conduites sous-marines véhiculant des fluides chauds ou froids, de préférence des conduites sous-marines destinées aux grandes profondeurs.

Dans la majorité des domaines industriels on recherche des systèmes d'isolation performants pour maintenir les fluides véhiculés dans les tuyauteries à température constante, de manière à ce que les transferts entre équipements puissent être rendus possibles sur des distances importantes, atteignant par exemple plusieurs centaines de mètres, voire plusieurs kilomètres. De telles distances sont courantes dans les industries telles que les raffineries de pétrole, les installations de gaz naturel liquéfié (-165°C), les champs pétroliers sous-marins lesquels s'étendent sur plusieurs dizaines de kilomètres. De tels champs pétroliers sont développés par des profondeurs d'eau de plus en plus importantes lesquelles peuvent dépasser 3000 m.

La présente invention concerne en particulier des éléments de conduites coaxiales destinées à la fabrication de conduites sous-marines installées sur les champs pétroliers par très grandes profondeurs, notamment les conduites de liaison fond-surface en suspension entre le fond de la mer et un navire de surface ancré sur ledit champ pétrolier.

Ces conduites coaxiales sont appelées "Pipe In Pipe" ou PiP, c'est à dire "conduite dans une conduite", dans laquelle une conduite interne véhicule le fluide et une conduite externe coaxiale à la précédente, appelée aussi "enveloppe externe", est en contact avec le milieu ambiant, c'est-à-dire l'eau. L'espace annulaire entre les deux conduites peut être rempli d'un matériau isolant ou encore être vidé de tout gaz.

Ces systèmes ont été développés pour atteindre un haut niveau de performance thermique et des versions spécifiques ont été développées pour répondre de manière plus adaptée aux grands fonds, c'est à dire pour résister à la pression du fond de la mer. En effet, la pression de l'eau étant sensiblement de 0.1 MPa, soit environ 1 bar pour 10m de profondeur, la pression à laquelle doit résister la conduite est alors d'environ 10 MPa, soit environ 100 bars pour 1000m de profondeur et d'environ 30 MPa, soit environ 300 bars pour 3000m.

Ces ensembles de conduites coaxiales sont fabriqués par assemblage bout à bout de longueurs unitaires dénommées ci-après "éléments de conduites coaxiales" ou "rames de conduites coaxiales", dont la longueur est en général de 10 à 100 mètres, plus particulièrement d'environ 12, 24 ou 48 mètres chacun(e).

Dans le cadre de l'installation de conduites sous-marines par grande profondeur, ces éléments de longueur unitaire sont fabriqués à terre. Puis, ils sont transportés en mer sur un navire de pose. Lors de la pose, les éléments unitaires d'ensemble de conduites coaxiales sont raccordés les uns aux autres à bord du navire et au fur et à mesure de leur pose en mer. Il est donc important que ce raccordement puisse être intégré dans le procédé de montage et d'assemblage de la conduite et de pose de celle-ci au fond de la mer en le retardant le moins possible, et puisse donc être réalisé rapidement et aisément.

Pour ce faire, on utilise des pièces de jonction ou pièces de raccordement forgées en acier, assemblées aux extrémités desdits éléments d'ensemble de conduites coaxiales à assembler. La pièce de jonction à l'extrémité aval d'un premier élément d'ensemble de conduites coaxiales non encore assemblé, étant raccordée à la pièce de jonction à l'extrémité libre amont d'un deuxième élément d'ensemble de conduites coaxiales déjà assemblé en aval.

Ces pièces de jonction forgées visent également à renforcer la résistance des conduites soumises à des flexions importantes au cours de la pose, notamment dans la zone de raccordement de deux dites longueurs unitaires successives, et plus particulièrement, dans le cas de liaisons fond-surface, à leur conférer une très grande résistance à la fatigue durant toute la durée de vie des installations.

Plus particulièrement la présente invention concerne desdites pièces forgées de jonction comprenant deux branches de révolution dont une branche externe et une branche interne formant une fourche délimitant ledit espace annulaire, fourche dont les extrémités cylindriques libres sont assemblées directement aux extrémités cylindriques respectivement des conduites externes et internes.

Des conduites coaxiales et pièces de jonction de ce type ont été décrits notamment dans FR 2 873 427, FR 2 878 936.

Une opération fondamentale pour la fiabilité mécanique des conduites PiP, réside dans les soudures entre les pièces de jonction forgées et lesdites conduites coaxiales. En particulier, les soudeurs doivent pouvoir contrôler la soudure en cours de réalisation et après réalisation, notamment à l'aide de dispositifs de contrôle de soudure par sonde à ultrasons, qui peuvent être mis en oeuvre de manière manuelle ou robotisée par un opérateur, et, en tout état de cause, doivent être déplacés contre et à proximité de la soudure, d'une part, axialement en translation d'avant en arrière dans la zone de la soudure, et d'autre part, sur toute la circonférence de la périphérie de la conduite dans ladite zone de soudure.

C'est pourquoi, il est souhaitable de pouvoir réaliser les soudures entre les pièces de jonction et les conduites coaxiales, depuis l'extérieur des conduites concernées, pour pouvoir les contrôler plus facilement. Mais, dans le cas de pièces de jonction forgées de type comprenant deux branches de révolution dont les extrémités cylindriques sont assemblées aux extrémités cylindriques respectives des conduites internes et externes, ce soudage depuis l'extérieur n'est pas possible pour ce qui concerne la soudure entre la branche interne de la pièce de jonction forgée et l'extrémité de la conduite interne, au moins par une des deux pièces de jonction pour laquelle la soudure est alors réalisée depuis l'intérieur de ladite conduite interne, comme il sera explicité ci-après. Or, cette opération de soudure, depuis l'intérieur de la conduite interne, est délicate et complexe à réaliser ainsi que le contrôle ultérieur de la soudure. On comprend, en effet, qu'en procédant depuis l'intérieur, un opérateur a de grandes difficultés de se positionner avec précision, aussi bien la torche de soudure que le dispositif de contrôle.

Comme rappelé précédemment, les zones de soudage sont particulièrement sensibles au phénomène de fatigue, tant durant la pose que pendant la durée de vie de la conduite, c'est pourquoi il est important de pouvoir en contrôler soigneusement la fiabilité.

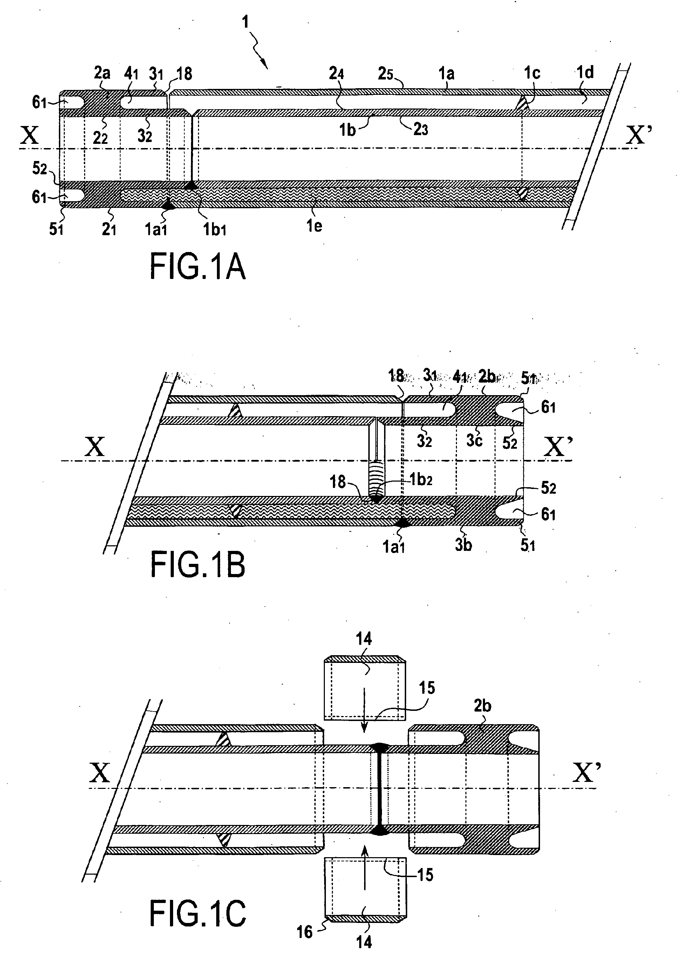

Pour pouvoir réaliser une soudure de la branche interne de la pièce de jonction forgée avec l'extrémité de la conduite interne, et ce depuis l'extérieur de la conduite interne, et ce aux deux extrémités d'un élément unitaire de conduite coaxiale, une solution est de réaliser des pièces de jonction en plusieurs parties et/ou d'intercaler des pièces rapportées, notamment des demi manchons tubulaires formant deux demi coquilles tubulaires intercalées entre les extrémités de la branche externe d'une pièce de jonction forgée et l'extrémité de la conduite externe correspondante, comme illustré sur la figure 1C. Ces demi coquilles sont rapportées par soudage entre les extrémités de la branche externe de la pièce de jonction forgée et de la conduite externe, et elles sont mises en place après réalisation de la soudure depuis l'extérieur de la conduite interne, entre l'extrémité de la branche interne de la pièce de jonction forgée et l'extrémité de la conduite interne.

Mais, ces pièces de jonction complexes et/ou associées à des éléments complémentaires de type coquilles, affectent la fiabilité mécanique de la pièce de jonction elle-même et, donc, de la jonction entre la pièce de jonction et la conduite. Une des raisons tient en ce qu'il est nécessaire de mettre en oeuvre des soudures dans la direction longitudinale de la conduite pour souder entre elles les deux demi manchons tubulaires, alors que ce type de soudure longitudinale est moins fiable que les soudures circulaires et, de surcroît, implique des croisements de soudure entre les soudures circulaires, assurant le raccordement entre les manchons tubulaires et les pièces de jonction forgées ou les extrémités de conduites coaxiales, et les soudures longitudinales assurant le raccordement entre les deux demi manchons tubulaire rapportés, lesdits croisements de soudure constituant des points de faiblesse supplémentaires.

On connaît aussi des systèmes dans lesquels la pièce de jonction est réalisée en deux éléments vissés et collés entre eux, mais ce type de réalisation de pièces de jonction présente également des lacunes dans la fiabilité mécanique.

On connaît aussi, dans FR 2 751 721, un mode de réalisation des extrémités d'un PiP, assorti d'un mode de renfort de la zone de raccordement entre deux longueurs unitaires de PiP par un manchon coulissant à jeu réduit sur l'enveloppe externe, ledit manchon coulissant étant solidarisé à ladite enveloppe externe par collage. Cette disposition permet d'augmenter localement l'inertie de la section transversale pour limiter les contraintes dans la zone de raccordement entre deux longueurs unitaires de PiP, mais nécessite la fabrication de plusieurs pièces mécaniques compliquées à monter et nécessite un raccordement relativement difficile à mettre en oeuvre. De plus le collage proposé reste sujet à fluage et se dégrade lors des cycles thermiques dont sont sujet les conduites au cours de leur durée de vie de 20 à 30ans. Enfin, ce type de collage ne pourrait pas être envisagé de manière fiable dans le cas de liaisons fond surface, car les effets dynamiques de la houle et du courant sur la conduite en suspension entre le fond de la mer et le support flottant, dégraderaient rapidement le plan de collage induisant une fatigue rapide et excessive sur la zone de raccordement du PiP.

Ainsi le problème posé est de réaliser un raccordement de longueur unitaire d'ensemble de conduites coaxiales de type PiP amélioré de manière à faciliter la mise en oeuvre des moyens de raccordement et opérations de raccordement, notamment moyens et opérations de soudage, et dont les zones de raccordement, notamment zones de soudage entre pièces de jonction et longueurs unitaires de conduites puissent être réalisées, de manière à ce que les contraintes engendrées lors de la pose soient minimisées et- que le comportement en fatigue, dans le cas des liaisons fond-surface soit radicalement amélioré.

Plus particulièrement, un problème à la base de l'invention est donc de fournir un procédé de fabrication amélioré d'un élément de conduites coaxiales comportant, à chaque extrémité, une pièce de jonction forgée composée d'une unique pièce forgée comprenant deux branches de révolution externe et interne assemblées directement aux extrémités respectives des conduites externe et interne.

Pour ce faire, la présente invention fournit un procédé de fabrication d'un élément de conduites coaxiales comprenant une conduite interne et une conduite externe et comportant à chacune de ses extrémités une pièce de jonction forgée de révolution, chaque dite pièce de jonction forgée comportant au moins deux premières branches de révolution, dont une première branche interne et une première branche externe , l'extrémité cylindrique de ladite première branche externe étant en retrait d'une longueur L₁ par rapport à l'extrémité cylindrique de ladite première branche interne.

Dans le procédé selon la présente invention, on réalise les étapes successives suivantes dans lesquelles :
1/ on soude l'extrémité cylindrique de ladite première branche interne d'une première pièce de jonction, avec une première extrémité de ladite conduite interne non recouverte par la conduite externe, la soudure étant réalisée depuis l'extérieure de ladite conduite interne, et
2/ on déplace ladite conduite externe co-axialement autour de ladite conduite interne, de manière à ce qu'une première extrémité de ladite conduite externe arrive bout à bout avec l'extrémité cylindrique correspondante de la première branche externe de ladite première pièce de jonction, la seconde extrémité de ladite conduite interne étant en retrait par rapport à la seconde extrémité correspondante de ladite conduite externe d'une longueur L₃ au moins égale à L₁, et
3/ on soude l'extrémité de ladite première branche externe de ladite première pièce dé jonction forgée avec l'extrémité de ladite conduite externe, depuis l'extérieur de ladite conduite externe.
   Puis, selon la présente invention, le procédé est **caractérisé en ce que** l'on réalise les étapes ultérieures successives suivantes dans lesquelles :
4/ on expanse de manière réversible, dans la direction longitudinale axiale XX', ladite seconde extrémité de ladite conduite interne, de manière à ce que celle-ci dépasse d'une longueur L₂ par rapport à ladite seconde extrémité correspondante de ladite conduite externe, et
5/ on soude depuis l'extérieur de ladite conduite interne, l'extrémité de la première branche interne d'une deuxième dite pièce forgée avec ladite seconde extrémité de ladite conduite interne en position expansée, et
6/ on résorbe l'expansion de ladite conduite interne jusqu'à ce que ladite seconde extrémité de la première branche externe de ladite deuxième pièce forgée arrive bout à bout avec ladite seconde extrémité de la conduite externe et
7/ on soude depuis l'extérieur de ladite conduite externe, l'extrémité de ladite première branche externe de ladite deuxième pièce forgée avec ladite seconde extrémité de ladite conduite externe.

On comprend que, à l'étape 4, on réalise une expansion de ladite conduite interne d'une longueur L₂+L₃ telle que la distance L=L₁+L₂ entre l'extrémité libre de ladite première branche externe de la deuxième pièce forgée et l'extrémité de ladite conduite interne soit suffisante pour permettre, depuis l'extérieur de la conduite interne, la réalisation de la soudure de l'extrémité cylindrique libre de la première branche interne de la deuxième pièce forgée avec l'extrémité de la conduite interne. En pratique, cette distance L=L₁+L₂ doit être au moins égale à 5 cm (ce qui correspond à la taille de la torche de soudure) et, de préférence, au moins 10 cm lorsque l'on utilise un matériel pour mouvoir en rotation la torche de soudure autour de ladite conduite à souder, comme il sera explicité ci-après.

On comprend donc, également, qu'au repos, lorsque les deux conduites externe et interne sont à même température sans traction et sans compression, l'extrémité de la conduite externe dépasse de l'extrémité de la conduite interne d'une longueur L₃ au moins égale au différentiel de longueur L₁ entre lesdites premières branches interne et externe desdites pièces forgées, ceci afin que, après résorption de l'expansion (étape 6), l'extrémité de ladite première branche externe arrive en contact bout à bout avec l'extrémité de ladite conduite externe.

Selon une première variante de réalisation du procédé de fabrication d'un élément de conduites coaxiales selon l'invention, à l'étape 4/, on réalise l'expansion de ladite conduite interne par chauffage de celle-ci, de préférence à l'aide de dispositifs de chauffage que l'on introduit et, de préférence que l'on déplace à l'intérieur de ladite conduite interne et que l'on fait agir de manière uniforme ou non le long de ladite conduite, à l'intérieur de celle-ci. On comprend que la résorption de l'expansion de l'étape 4/, se fait alors par simple refroidissement.

Dans un second mode de réalisation, à l'étape 4/, on réalise ladite expansion par traction longitudinale XX' mécanique de ladite conduite interne à l'aide d'un dispositif de traction comprenant un treuil ou un vérin disposé à l'extérieur de ladite conduite interne. On comprend que la résorption de l'expansion se fait par relâchement de ladite traction.

Il est également intéressant de pouvoir combiner les deux modes d'expansion, comme explicité plus loin.

Plus particulièrement, à l'étape 4/, ladite expansion se fait par traction longitudinale de ladite conduite interne et compression longitudinale simultanée de ladite conduite externe au niveau de leurs dites secondes extrémités. Cette compression longitudinale est due à la mise en oeuvre de moyens de blocage de la conduite externe comme explicité plus loin.

La présente invention fournit également un élément de conduites coaxiales comprenant une conduite interne et une conduite externe avec un espace annulaire, de préférence rempli d'un matériau d'isolation, de préférence encore maintenu sous vide poussé, et à chaque extrémité une pièce de fermeture étanche dudit espace annulaire constituée chacune par une pièce de jonction de révolution forgée constituée chacune d'un seul bloc, destinée à la jonction de deux dits éléments de conduites coaxiales bout à bout, chaque dite pièce de jonction comportant au moins deux premières branches de révolution dont une première branche de révolution interne soudée directement à une extrémité de ladite conduite interne avec un cordon de soudure circulaire et une première branche externe soudée directement à l'extrémité de ladite conduite externe avec un cordon de soudure circulaire, lesdites premières branches internes de révolution étant plus longues par rapport aux dites premières branches externes d'une longueur L₁ dans la direction longitudinale axiale XX' dudit élément de conduites coaxiales, chaque dite pièce de jonction à chaque extrémité dudit élément de conduite étant destinée à être assemblée, d'un côté aux extrémités desdites conduites externe et interne dudit élément de conduite coaxiale, et du côté opposé, directement à une autre dite pièce de jonction, elle-même assemblée par soudage à l'extrémité d'un autre élément unitaire de conduite coaxiale, **caractérisé en ce que** tous lesdits cordons de soudure circulaires sont déposés du coté extérieur des conduites interne et externe.

On entend ici par "pièce de jonction constituée d'un seul bloc", une pièce de jonction forgée constituée d'un seul tenant et non pas de plusieurs parties assemblées.

D'autre part, on entend ici par "soudées directement", le fait que les extrémités desdites conduites internes et externes et de la pièce forgée sont assemblées l'une à l'autre sans pièce ou élément intermédiaire intercalé.

Enfin, on entend par "cordon de soudure déposé du coté extérieur", que ledit cordon de soudure est réalisé sur la surface externe des conduites interne et respectivement externe le cas échéant.

Dans un mode préféré de réalisation du procédé selon l'invention :
- à l'étape 2/, ladite seconde extrémité de la conduite externe du coté destiné à être raccordé à ladite deuxième pièce de jonction forgée (2a), est ajustée de manière à dépasser de ladite seconde extrémité correspondante de la conduite interne d'une longueur L₃=L₁+e, et
- à l'étape 4/, on réalise une expansion de ladite conduite interne d'une longueur L₂ supérieure ou égale à L,+e, de sorte que, à l'issue du soudage de l'étape 7/, ladite conduite interne se trouve soumise à une traction correspondant à un allongement résiduel inférieur ou égal à e.

En pratique e représente de 5 à 100 mm pour un élément de conduite interne de 25 à 50 m.

On comprend que cet allongement résiduel est dû au fait que l'extrémité de ladite première branche interne de la deuxième pièce forgée dépassant d'une longueur L₁ par rapport à l'extrémité de ladite première branche externe de ladite deuxième pièce forgée, à l'issue de l'étape 6/, l'extrémité de ladite conduite interne ne peut reculer que d'une longueur L₁. Et, à l'issue de l'étape 7/, l'allongement résiduel de ladite conduite interne est inférieur ou égal à e selon les cas suivants :
- l'allongement résiduel de la conduite interne est sensiblement égal à e dans le cas où l'expansion de la conduite interne a été obtenue par traction directe sur la conduite interne, induisant de manière concomitante une contrainte de compression dans l'enveloppe externe;
- l'allongement résiduel de la conduite interne représente un pourcentage Rₜₕ de e, dans le cas où l'expansion est obtenue par effet thermique, compte tenu que, lors du refroidissement de la conduite interne après soudure, la traction exercée par ladite conduite interne sur la pièce forgée provoque concomitamment une compression longitudinale de ladite conduite externe au niveau de sa seconde extrémité, ce qui a pour effet de raccourcir la longueur de la rame, réduisant d'autant la contrainte de traction dans la conduite interne. Ledit pourcentage Rₜₕ est fonction du rapport des surfaces des sections transversales d'acier de la conduite interne et de l'enveloppe externe;
- l'allongement résiduel de la conduite interne représente un pourcentage Rₘᵢₓₜₑ de e, dans le cas où l'expansion est obtenue de manière mixte par traction mécanique et par effet thermique, Rₘᵢₓₜₑ étant compris entre 100% et Rₜₕ.

Ce mode de réalisation avec une conduite interne sous contrainte de traction est particulièrement avantageux car, lorsque la conduite coaxiale est en service en cours d'utilisation au fond de la mer et que la température du fluide la traversant atteint des températures hautes (120-150°C), l'augmentation de température provoque une expansion de la conduite interne relativement à la conduite externe qui reste en contact de la température du fond de la mer (3-5°C), ce qui provoque une compression de ladite conduite interne, cette dernière étant bloquée à ses extrémités au niveau desdites pièces de jonction forgées. Cette mise en compression est traditionnellement jugulée par la mise en place d'éléments centraliseurs entre lesdites conduites interne et externe qui sont d'un coût élevé, difficiles à installer et créent des ponts thermiques qui réduisent d'autant l'efficacité du système d'isolation. Ainsi, la traction résiduelle de la conduite interne au cours du procédé de fabrication selon l'invention, permet de réduire d'autant la contrainte de compression de la conduite interne lorsque celle-ci est en service et, donc, d'augmenter l'espacement des éléments centraliseurs avantageusement et donc réduire leur nombre.

La présente invention fournit également un élément de conduites coaxiales tel que défini ci-dessus, **caractérisé en ce que** ladite conduite interne est soumise à une contrainte de traction exercée par chaque dite pièce de jonction à chaque extrémité, lorsque ledit élément de conduite coaxiale est hors service.

On entend par "hors service", que ledit élément de conduites coaxiales n'est pas assemblé dans un ensemble d'éléments de conduites coaxiales et/ou n'est pas manipulé, ou est assemblé dans un ensemble d'éléments de conduites coaxiales, mais ledit ensemble n'est pas manipulé et/ou n'est pas parcouru par un fluide à transporter. Une telle situation se produit en fin de processus de fabrication à terre, pendant le transport et l'installation lorsque l'élément de conduite ou la conduite est à température ambiante jusqu'à ce que la conduite repose sur le fond de la mer, à la température dudit fond de la mer, en attente du démarrage de la production, et, enfin, en cas d'arrêt prolongé de la production, les conduites interne et enveloppe externe étant alors stabilisées à la température de l'eau de mer (3-5°C).On entend par «élément de conduite ou conduite à température ambiante » que les dites conduites interne et externe sont à la même température que la température environnante de l'air ou de l'eau de mer le cas échéant si la conduite est immergée.

On comprend que ladite contrainte de traction est due audit allongement résiduel de la conduite interne par rapport à sa longueur au repos après résorption partielle de ladite expansion à l'étape 6 et après le soudage de l'étape 7. On entend ici par « repos » que ladite conduite interne n'est soumise à aucune traction ou compression, comme c'est le cas lorsqu'elle est hors service et en l'absence de pièce de jonction.

On comprend donc que ladite contrainte de traction exercée par lesdites pièces de jonction s'exerce en sens opposé à chaque extrémité de l'élément unitaire de conduite.

Selon la présente invention, la présence d'une pièce de jonction, de fermeture à chaque extrémité de l'élément unitaire de conduite permet aussi d'assembler les pièces de jonction à terre en établissant un vide poussé ou en confinant un matériau d'isolation dans l'espace annulaire entre les conduites interne et externe, ce qui serait difficile à réaliser à bord du navire.

Avantageusement, ladite conduite interne est soumise à une traction correspondant à une contrainte de traction inférieure à 90%, de préférence de 5 à 75% de la limite élastique de l'acier constituant ladite conduite interne, lorsque ledit élément de conduites coaxiales est hors service, c'est-à-dire notamment à température ambiante.

Plus particulièrement et en pratique, cette contrainte de traction correspond à la traction à exercer sur une dite conduite interne de 25 à 50 m pour lui faire subir un allongement de 5 à 100 mm.

Cette contrainte de traction de la conduite interne peut être détectée et mesurée par des procédés et moyens connus, soit de type non destructif, soit de type semi-destructif.

Des procédés et moyens pour détecter une contrainte de traction consistent par exemple :
- à installer sur la conduite externe des jauges de contraintes parallèlement à l'axe XX du PiP et de manière circulaire perpendiculairement à ce même axe,
- puis à percer à proximité desdites jauges un trou de faible diamètre, par exemple 4mm, sur 75% à 80% de l'épaisseur de la conduite, de manière à ne pas perforer cette dernière.

En l'absence de précontrainte, aucune modification de l'état des jauges ne sera mise en évidence. En cas de précontrainte de la conduite intérieure, il se produira dans la zone du trou un relâchement de contraintes de compression existant dans l'enveloppe externe, induisant des allongements localisés, parallèlement à l'axe du PiP, allongements mis en évidence au niveau desdites jauges de contraintes longitudinales et circulaires. En connaissant les valeurs d'élongation obtenues dans la zone du trou, un calcul en éléments finis avec maillage fin, connu de l'homme de l'art; permet de déterminer l'ordre de grandeur des contraintes de compression de ladite enveloppe externe, donc d'en déduire l'ordre de grandeur de la contrainte de traction au sein de la conduite intérieure.

Il existe d'autres moyens non destructifs basés soit sur un bombardement de neutrons rapides, dont la trajectoire se trouve modifiée selon que ladite conduite est soumise à une contrainte de traction ou de compression. Cette méthode est très délicate à mettre en oeuvre, mais est utilisée de manière courante pour mettre en évidence l'état de relaxation des contraintes dans certaines pièces mécaniques sensibles utilisées principalement en aéronautique ou dans l'industrie spatiale.

Il résulte de cette traction de la conduite interne que, lorsque l'on désolidarise les extrémités de l'élément de conduites coaxiales de l'une au moins des dites pièces de jonction forgées soudées à ces extrémités, on observe un raccourcissement de ladite conduite interne.

En pratique, on observe un raccourcissement de la conduite interne de 5 à 100 mm pour un élément de conduite interne de 25 à 50 m.

D'autre part, comme mentionné précédemment, on observe en général également une compression de la conduite externe, mais d'une valeur moindre.

Plus particulièrement, ledit élément de conduites coaxiales est destiné à l'assemblage de conduites sous-marines en acier et présente une longueur de 10 à 100 m, de préférence de 20 à 50 m.

Selon d'autres caractéristiques avantageuses :
- lesdites premières branches interne et externe desdites pièces forgées de révolution sont sensiblement de même épaisseur respectivement que lesdites conduites interne et externe à leurs extrémités;
- le matériau isolant est un matériaux microporeux ou nanoporeux, de préférence un aérogel, se présentant, de préférence encore, sous forme de grains de 0,5 à 5 mm de diamètre.

Avantageusement, on réalise lesdits soudages avec un dispositif comprenant une tête de soudage fixe, de préférence à la verticale au-dessus dudit élément de conduites, et on fait tourner ledit élément de conduites sur lui-même autour de son axe longitudinal XX', de préférence à l'aide de roulettes ou de vireurs motorisés sur lesquels repose ladite conduite externe.

Avantageusement encore, on réalise l'expansion avec un dispositif de traction qui comprend ou coopère avec :
- des moyens de blocage de ladite conduite interne, permettant ainsi une translation longitudinale de ladite conduite interne en expansion lorsque le dispositif de traction est actionné, et autorisant la rotation de ladite conduite interne autour de son axe longitudinal XX' le cas échéant, et
- des moyens de blocage de ladite conduite externe, empêchant tout mouvement de translation longitudinale de ladite conduite externe, et autorisant sa rotation autour de son axe longitudinal XX'.

Plus particulièrement, lesdits moyens de blocage de la conduite externe, comprennent :
- un premier dispositif de blocage par compression radiale disposé fixement autour de ladite conduite externe tel qu'un collier à coins bloquant, et
- un premier corps périphérique fixe par rapport au sol, coopérant avec ledit premier dispositif de blocage par l'intermédiaire d'un premier palier autorisant la rotation de ladite conduite externe selon son axe longitudinal XX'.

Plus particulièrement encore, ledit premier palier comprend des roulements à rouleaux croisés, dans et entre une cage intérieure solidaire dudit collier, et une cage extérieure solidaire dudit premier corps périphérique fixe.

Dans un mode préféré de réalisation, ledit dispositif de traction comprend ou coopère avec au moins un tirant, constitué d'un câble ou d'une tige rigide, apte à être déplacé en translation longitudinale XX' par treuil ou un vérin, relié à un deuxième dispositif de blocage de ladite conduite interne par compression radiale de la paroi interne de ladite conduite interne, disposé à l'intérieur de ladite conduite interne, tel qu'un mandrin autobloquant.

Plus particulièrement, ledit dispositif de traction comprend au moins deux vérins diamétralement opposés, de préférence au moins quatre vérins régulièrement répartis circulairement, dont les pistons solidaires de tiges viennent en butée avec ledit premier corps périphérique fixe support dudit premier palier, lesdits vérins étant reliés au dit tirant par l'intermédiaire d'un second palier, constitué de préférence d'un roulement à rouleaux croisés, comportant un second corps périphérique fixe par rapport au sol supportant lesdits vérins, apte à coopérer avec un support solidaire dudit tirant, de sorte qu'en appliquant aux vérins une pression P, le tirant exerce une traction sur la conduite interne, tout en autorisant la rotation dudit élément de conduites autour de son axe longitudinal XX', lesdits premier et second corps périphériques ainsi que les tiges des vérins restant fixes par rapport au sol, autorisant ainsi l'utilisation d'une tête de soudage fixe.

D'autres caractéristiques et avantages de la présente invention apparaîtront à la lumière de la description détaillée qui va suivre, en référence aux figures suivantes dans lesquelles :
les figures 1A et 1B représentent en coupe longitudinale en vue de côté une rame de type PiP remplie d'un matériau isolant sous pression réduite de gaz et équipée à ses extrémités, respectivement gauche (fig. 1A) et droite (fig. 1B), de pièces forgées de jonction selon l'art antérieur,
la figure 1C représente une variante de réalisation, dans laquelle on intercale des demi manchons tubulaires entre les extrémités des branches externes de la pièce forgée et l'extrémité de la conduite externe,
la figure 2A représente en coupe longitudinale en vue de côté, l'extrémité droite d'une rame de type PiP selon l'invention, illustrant l'expansion longitudinale transitoire selon l'axe XX' de la conduite interne sur une longueur L₃+L₂, ladite conduite interne étant initialement en retrait d'une longueur L₃ par rapport à la conduite externe, de manière à pouvoir effectuer la soudure de ladite conduite interne sur la pièce forgée d'extrémité, depuis l'extérieur,
la figure 2B est une coupe identique à la coupe de la figure 2A, après résorption de l'expansion de ladite conduite interne, la pièce forgée d'extrémité venant alors en contact avec la conduite externe et autorisant de ce fait la réalisation de la soudure externe depuis l'extérieur,
la figuré 3A représente en coupe longitudinale en vue de côté une rame de type PiP selon l'invention, dans laquelle l'expansion de la conduite interne est réalisée par chauffage de ladite conduite interne au moyen de trois cartouches chauffantes électriques réparties le long de ladite conduite interne,

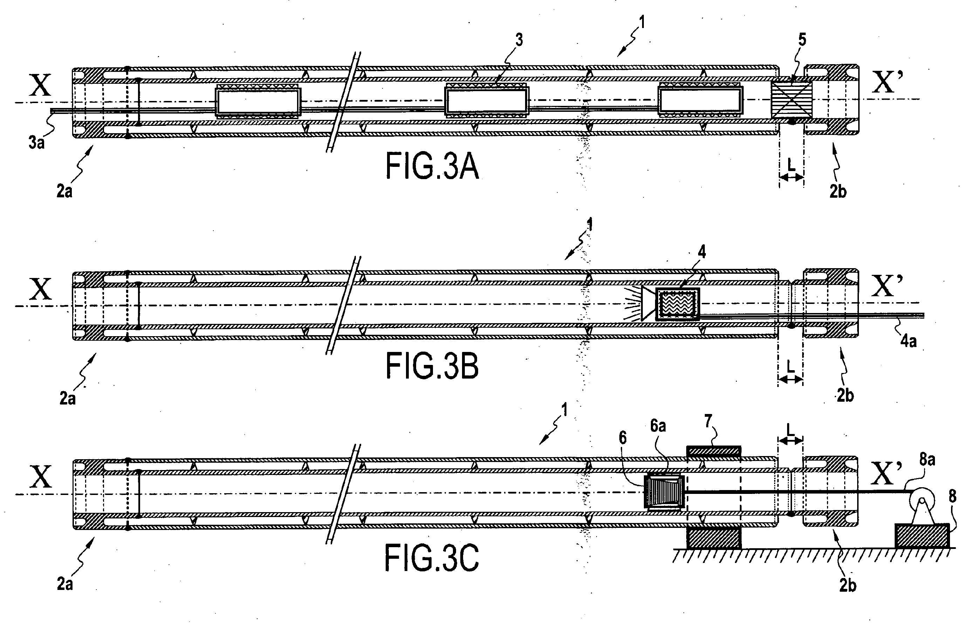

la figure 3B illustre un autre mode de chauffage à l'aide d'un brûleur à gaz ou à fuel, ou encore un générateur d'air chaud,
la figure 3C illustre un autre mode d'expansion de la conduite interne basé sur la traction de l'extrémité de ladite conduite interne au moyen d'un treuil et d'un câble relié à un dispositif de blocage installé à proximité de l'extrémité de ladite conduite interne,

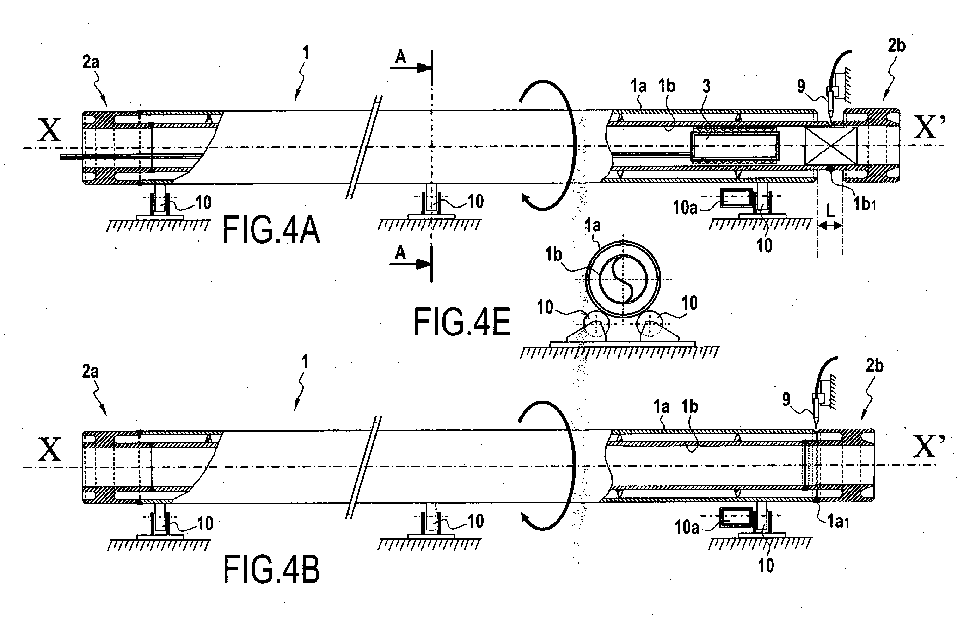

la figure 4A illustre le mode de soudage de la pièce forgée d'extrémité sur la conduite interne du PiP de la figure 3A, l'ensemble du PiP étant mis en rotation pour effectuer ledit soudage à l'aide d'une tête de soudage fixe,
la figure 4B illustre le mode de soudage de la pièce forgée d'extrémité sur la conduite extérieure du PiP après rétractation de la conduite interne par simple refroidissement, l'ensemble du PiP étant mis en rotation pour effectuer ledit soudage à l'aide d'une tête de soudage fixe,

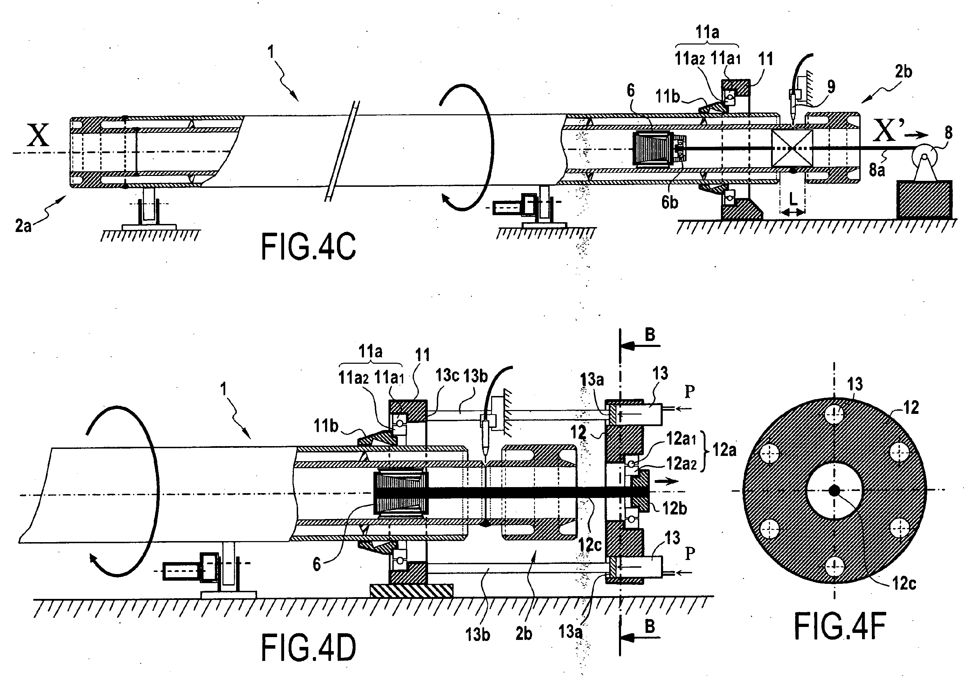

la figure 4C illustre le mode de soudage de la pièce forgée d'extrémité sur la conduite interne du PiP de la figure 3C, l'ensemble du PiP étant mis en rotation pour effectuer ledit soudage à l'aide d'une tête de soudage fixe,
la figure 4D illustre le mode de soudage de la pièce forgée d'extrémité sur la conduite interne du PiP, avec un dispositif de traction comprenant des vérins hydrauliques, l'ensemble du PiP étant mis en, rotation pour effectuer ledit soudage à l'aide d'une tête de soudage fixe,
la figure 4E est une vue en coupe selon AA de la figure 4A,
la figure 4F est une vue en coupe selon BB de la figure 4D,

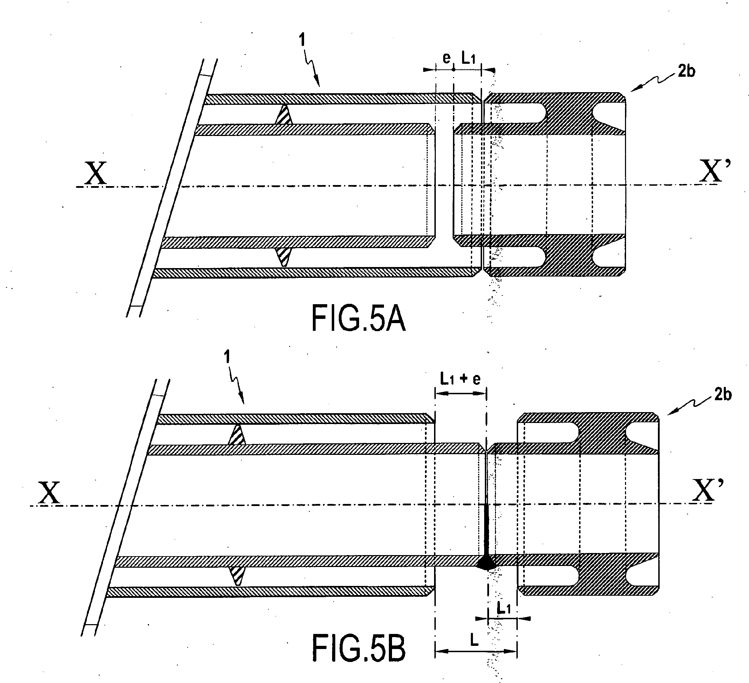

les figures 5A et 5B représentent en coupe longitudinale en vue de côté, l'extrémité droite d'une rame de type PiP selon l'invention, respectivement au repos avant assemblage, et en expansion pour effectuer la soudure de la conduite interne sur la pièce forgée d'extrémité, ladite conduite interne se trouvant soumise à une traction après soudage sur ladite pièce de jonction forgée d'extrémité.

Dans les figures 1 à 5, on a représenté une conduite 1 de type PiP constituée d'une conduite externe 1a et d'une conduite interne 1b solidarisées par soudures à une première pièce de jonction forgée 2a située sur la gauche de la figure 1A et à une seconde pièce de jonction forgée 2b située sur la droite de la figure 1B, l'espace annulaire 1d entre les deux dites conduites interne et externe, étant rempli d'un matériau isolant 1e. Des éléments centraliseurs 1c sont répartis, de manière espacée de préférence régulière, autour de la circonférence et le long de la longueur de la conduite interne. Ces centraliseurs maintiennent la distance radiale entre les conduites interne et externe et donc l'épaisseur dudit espace annulaire à une valeur sensiblement constante.

Lesdites pièces de jonction 2a, 2b sont délimitées comme suit :
dans une direction radiale par rapport à un axe longitudinal XX' de révolution de ladite pièce, elle est délimitée par une paroi interne cylindrique 2₂ sensiblement de même diamètre que celui de la partie courante de ladite conduite interne 1b, et par une paroi externe 2₁ cylindrique de diamètre sensiblement égal au diamètre externe de la partie courante de ladite conduite externe 1a, et
dans la direction axiale longitudinale XX',
   - du côté de ladite pièce de jonction destinée à être assemblée par soudage à l'extrémité desdites conduites externe et interne d'un dit élément de conduites coaxiales, lesdites parois externe 2₁ et interne 2₂ de ladite pièce de jonction forment en section longitudinale des premières branches respectivement externe 3₁ et interne 3₂ sensiblement de même épaisseur que lesdites conduites externe 1a et interne 1b auxquelles elles sont destinées à être assemblées, lesdites premières branches externe 3₁ et interne (3₂) délimitant une première cavité annulaire 4₁ et
   - du côté opposé de ladite pièce de jonction destinée à être assemblée à une autre dite pièce de jonction, elle-même assemblée par soudage à l'extrémité d'un autre élément d'ensemble de conduites coaxiales, lesdites parois externe 2₁ et interne 2₂ forment en section longitudinale des deuxièmes branches respectivement externe 5₁ et interne 5₂, délimitant une deuxième cavité annulaire 6₁,
   - les fonds desdites première et deuxième cavités 4₁, 6₁ étant espacés dans ladite direction longitudinale XX', de manière à délimiter une zone pleine de ladite pièce de jonction dans laquelle lesdites parois externe 3₁ et interne 3₂ forment les faces externe et interne d'une même paroi cylindrique.

La première cavité annulaire 4₁ est ouverte sur l'espace annulaire 1d et peut recevoir le matériel d'isolation 1e de façon à continuer l'isolation de la conduite le plus loin possible.

Après assemblage et raccordement de deux longueurs unitaires de PiP équipées de pièces de jonction forgées, la deuxième cavité annulaire 6₁ d'une première pièce de jonction 2a à l'extrémité aval d'une première longueur de PiP 1 est ouverte sur une deuxième cavité annulaire d'une deuxième pièce de jonction 2a à l'extrémité amont d'une deuxième longueur de PiP formant ainsi une chambre formée par soudage au niveau des extrémités des deuxièmes branches externes 5₁. Mais cette chambre n'est pas étanche, car l'extrémité des deuxièmes branches internes 5₁ des deux pièces de jonction n'est pas soudée, les faces desdites branches étant simplement en contact l'une avec l'autre.

Plus particulièrement, dans les pièces de jonction forgées :
- l'extrémité libre de ladite deuxième branche externe 5₁ présente une forme, de préférence un chanfrein 18, la rendant apte à être soudée, depuis l'extérieur de la conduite, à l'extrémité libre d'une autre dite deuxième branche externe d'une autre pièce de jonction à laquelle elle est destinée à être assemblée, ladite autre pièce de jonction étant, elle-même, assemblée à l'extrémité d'un deuxième dit élément d'ensemble de deux conduites coaxiales, et
- l'extrémité libre de ladite deuxième branche interne 5₂ présente une forme la destinant à buter en contact sans lui être soudée avec l'extrémité libre d'une autre dite deuxième branche interne d'une autre dite pièce de jonction assemblée à l'extrémité d'un dit deuxième élément d'ensemble de conduites coaxiales, et
- les extrémités libres des dites deuxièmes branche externe 5₁ et branche interne 5₂ d'une même pièce de jonction arrivent sensiblement au même niveau dans ladite direction longitudinale XX', et
- les deux dites deuxièmes branches externes des deux dites pièces de jonction destinées à être assemblées par soudure étant de même épaisseur, supérieure à l'épaisseur de ladite conduite externe, et de préférence supérieure à l'épaisseur de ladite deuxième branche interne de ladite pièce de jonction.

Les extrémités libres desdites premières branches externes 3₁ et interne 3₂ présentent une forme, en chanfrein 18, ce qui permet d'effectuer de manière connue une première passe de soudage dite « de pleine pénétration », suivie d'un remplissage complet du chanfrein. Sur la figure 1A, les chanfreins 18 sont tournés vers l'extérieur et sont donc aptes à être soudés depuis l'extérieur desdites conduites externe 3₁ et interne 3₂. Sur la figure 1B, les chanfreins 18 sont tournés vers l'extérieur à l'extrémité de ladite première branche externe et vers l'intérieur à l'extrémité de ladite première branche interne, les rendant aptes à être soudés respectivement depuis l'extérieur dudit ensemble pour lesdites premières branches externes et depuis l'intérieur de ladite conduite interne pour lesdites premières branches internes.

La formation desdites première et deuxième cavités annulaires permet d'une part d'établir une continuité au niveau du diamètre interne de la conduite interne et d'autre part de fournir une relative continuité et identité d'inertie de la section transversale, de la zone courante du PiP et de la zone de raccordement, l'épaisseur de la branche externe de la pièce de jonction forgée étant sensiblement égale ou légèrement supérieure à l'épaisseur courante de la conduite externe.

L'éloignement des extrémités desdites premières branches externe et interne par rapport au fond de la première cavité et de l'extrémité de ladite deuxième branche externe par rapport au fond de ladite deuxième cavité, permet de réaliser les soudages dans les meilleures conditions, car la masse d'acier de part et d'autre de la zone de soudage est sensiblement égale et la zone de fusion ne se trouve alors pas perturbée par un « effet radiateur » provoqué par la zone pleine et massive située entre les fonds desdites première et deuxième cavités, ladite perturbation consistant en un refroidissement déséquilibré entre la gauche et la droite de ladite zone de soudure.

Enfin, la continuité du diamètre de la paroi externe au niveau de la dite pièce de jonction par rapport à celui des parties courantes des conduites externes permet de créer une augmentation importante de l'inertie de la section transversale au niveau de la zone de raccordement de deux pièces de jonction adjacentes, et donc de renforcer le raccordement là où précisément les contraintes sont maximales. En effet, l'inertie de la section transversale d'une conduite par rapport à son centre varie comme la puissance 4 du rayon. En conséquence, si la section transversale considérée correspond à celle de la conduite externe du PiP, l'épaisseur nécessaire est fortement réduite, voire même dans certains cas divisée par deux, ce qui simplifie considérablement les opérations d'assemblage par soudage effectuées à bord des navires d'installation, dans des conditions difficiles.

D'autre part, le fait que deux pièces de jonction adjacentes soient soudées, uniquement au niveau de l'extrémité desdites deuxièmes branches externes, permet que la totalité des phénomènes de transferts dé charge et de contraintes soit localisée au niveau externe et n'implique pas lesdites parois internes, ce qui permet de mieux contrôler les risques de fissuration ou phénomènes de fatigue et d'éviter que le dispositif ne se ruine complètement au niveau de la paroi interne.

En outre, le fait que les deux extrémités desdites deuxièmes branches internes de deux pièces de jonction adjacentes, ne soient pas soudées entre elles, autorise des mouvements infimes desdites parois internes face à face dus à des éventuelles flexions ou variations de pression ou de température et autorise que lesdites parois internes puissent se déformer plastiquement et permettre un matage desdites deuxièmes branches internes sans risquer de transférer des charges de compression de contact, ce qui permet d'éviter de perturber la répartition des contraintes dans la zone d'assemblage et que l'essentiel des contraintes soit repris au niveau des parois externes desdites pièces.

La formation de ladite paroi interne cylindrique qui assure une continuité presque complète avec la conduite interne, permet d'éviter des phénomènes de turbulence du type vortex dans la circulation du fluide à l'intérieur du dispositif après assemblage, au niveau du raccordement de deux dites pièces de jonction de deux portions de PIP adjacentes.

On notera que ladite deuxième cavité ne doit pas être étanche après raccordement de deux pièces de jonction, vis-à-vis de l'intérieur de ladite paroi interne et de ladite conduite interne car lors du démarrage de la circulation d'un fluide à l'intérieur, celui-ci devra migrer vers cette deuxième cavité, l'étanchéité étant assurée par la soudure externe au niveau de l'extrémité desdites deuxièmes branches externes, le fluide se trouvant piégé durant toute le durée de vie de l'installation au niveau de cette deuxième cavité.

Toutes ces caractéristiques contribuent à améliorer radicalement le comportement en flexion, ainsi qu'en fatigue, d'un dispositif impliquant deux éléments d'ensemble coaxial équipés de dites pièces de jonction raccordées l'une à l'autre, à bord des navires d'installation, et dans le cas de liaisons fond-surface, durant toute leur durée de vie qui peut excéder 30 ans.

Par ailleurs, la fabrication et l'assemblage desdites pièces de jonction sont relativement aisés et fiables en ce qui concerne le raccordement de deux pièces de jonction adjacentes et le raccordement d'une pièce de jonction avec l'extrémité d'un ensemble d'au moins deux conduites coaxiales.

Dans les figures 1A et 1B, on a représenté en coupe longitudinale en vue de côté une rame 1 de type PiP remplie d'un matériau isolant 1e sous pression réduite de gaz et équipée à ses extrémités, respectivement gauche et droite, d'une première pièce de jonction forgée 2a et d'une seconde pièce de jonction forgée 2b, assemblées selon l'art antérieur. L'assemblage est effectué par soudage selon la séquence suivante. La conduite interne 1b est soudée en premier sur la branche interne 3₁ de la première pièce de jonction forgée d'extrémité avec un cordon de soudure 1b₁ réalisé depuis l'extérieur de la conduite interne, comme représenté sur la figure 1A. Puis, l'enveloppe externe 1a est insérée autour de la conduite interne 1b et maintenue de manière concentrique grâce à des centraliseurs 1c répartis le long de la rame de manière régulière ou non. Ladite enveloppe externe est alors soudée par un cordon de soudure 1a₁ réalisé depuis l'extérieur de ladite conduite externe sur la branche externe 3₁ de ladite première pièce de jonction forgée 2a. Ces deux soudures sont réalisées depuis l'extérieur de manière connue.

Pour la clarté des figures, les cordons de soudure sont en général représentés seulement sur la partie basse de la figure, les éléments à souder étant représentés face-à-face en partie haute, prêts à être soudés.

La seconde extrémité nécessite un mode particulier de soudage, car les deux conduites sont en position finale coaxiale avec l'extrémité de la conduite externe qui recouvre l'extrémité correspondante de la conduite interne d'une longueur L₃. Lors de la mise en place de ladite seconde pièce forgée 2b, il est alors nécessaire de réaliser la soudure de ladite seconde pièce forgée 2b sur la conduite interne 1b avec une soudure 1b₂ réalisée depuis l'intérieur de ladite conduite interne, ce qui est très délicat et nécessite des moyens compliqués de contrôle, car les soudeurs n'ont pas une vision directe du bain de soudure en raison du confinement à l'intérieur de la conduite. La soudure de la seconde pièce forgée 2b sur l'enveloppe externe 1a est réalisée de manière conventionnelle en 1a₁ depuis l'extérieur.

Sur la figure 1C, on a représenté une variante de réalisation selon la technique antérieure, permettant de réaliser toutes les soudures entre les pièces de jonction 2a, 2b et les conduites interne et externe depuis l'extérieur desdites conduites. Pour ce faire, pour la mise en place de la deuxième pièce forgée 2b, on fait dépasser vers l'extérieur l'extrémité de la conduite interne par rapport à celle de la conduite externe, ce qui permet de réaliser une soudure de la conduite interne sur ladite pièce de jonction forgée, depuis l'extérieur de la conduite interne. Puis, on intercale, entre l'extrémité de la branche externe 3₁ de la pièce de jonction et l'extrémité correspondante de la conduite externe, deux demi coquilles 14 en forme de demi manchons tubulaires. Mais, ce mode de réalisation n'est pas satisfaisant car il affecte la fiabilité mécanique de la jonction entre la deuxième pièce de jonction 2b et l'élément de conduites coaxiales, notamment à cause de la nécessaire mise en oeuvre d'une soudure longitudinale au niveau de la jonction longitudinale 15 des deux demi coquilles, et à cause du nécessaire croisement de soudure entre la soudure circulaire au niveau des chanfreins 16 et la soudure longitudinale au niveau des bords longitudinaux 15, à l'extrémité desdites soudures longitudinales.

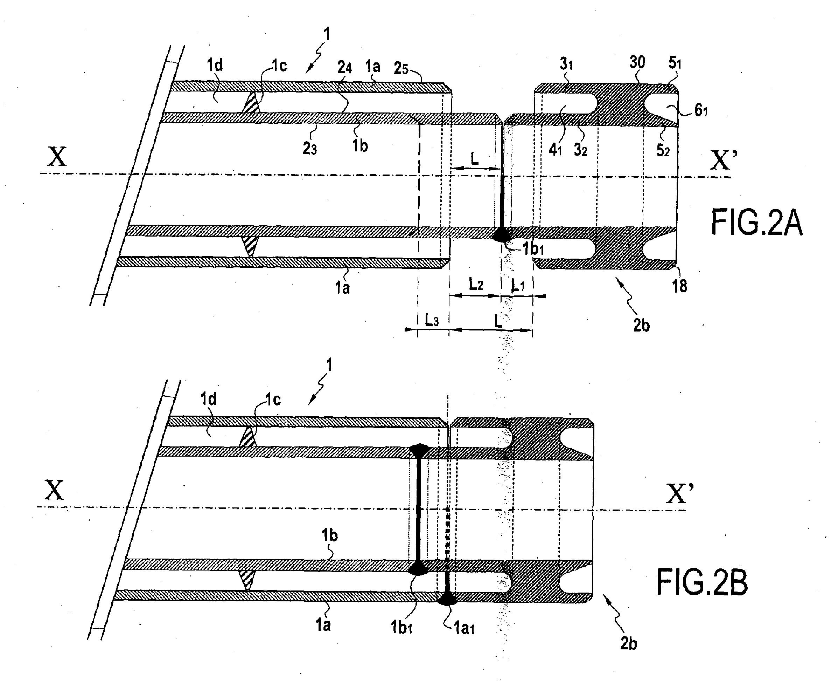

Dans les figures 2A et 2B, on a représenté en coupe longitudinale en vue de côté, le soudage de la seconde extrémité d'une rame 1 de type PiP à une seconde pièce forgée de jonction 2b assemblée selon l'invention par soudage depuis l'extérieur et selon la séquence suivante. Dans une première étape, la conduite interne et l'enveloppe externe sont soudées à la première pièce forgée, comme expliqué précédemment en regard de la figure 1A. La conduite interne 1b dont la seconde extrémité est initialement en retrait d'une longueur L₃ par rapport à la seconde extrémité correspondante de la conduite externe, est alors expansée de manière réversible, longitudinalement selon l'axe XX', du coté de sa deuxième extrémité d'une longueur L₃+L₂, comme il sera expliqué plus avant dans la description; de manière à ce que ladite deuxième extrémité de ladite conduite interne dépasse de l'extrémité de l'enveloppe externe d'une longueur L₂, telle que la distance entre ladite extrémité de l'enveloppe externe 1a et celle correspondante de la branche externe de la seconde pièce de jonction forgée 2b, au niveau de sa périphérie, atteigne une valeur L=L₂+L₁ suffisante pour permettre l'accès à la torche de soudage 9 et aux équipements de soudage conventionnels pour effectuer une soudure 1b₁ depuis l'extérieur, de l'extrémité de la conduite interne avec l'extrémité de la branche interne 3₂ de la pièce forgée 2b quand lesdites extrémités sont mises bout à bout. Après le soudage et les opérations de contrôle, l'expansion de la conduite interne est alors résorbée et la seconde pièce forgée revient en contact avec l'enveloppe externe pour être soudée de manière connue depuis l'extérieur en 1a₁.

Sur la figure 3A, on a représenté un premier mode d'expansion de la conduite interne constitué d'un système de chauffage de ladite conduite interne. A cet effet, depuis la première extrémité, on insère une ou plusieurs cartouches chauffantes 3 constituées d'un cylindre métallique ou une pluralité de cylindres métalliques espacés comportant à leur surface des résistances électriques et introduits à l'intérieur de ladite conduite interne, réparties de manière uniforme ou non le long de ladite conduite interne. Ces cartouches 3 sont, alimentées par un câble 3a. Le chauffage provoque une expansion proportionnelle à la longueur de conduite mise en température et à la variation de température dans la zone considérée. L'expansion de la conduite interne 1b permet de dégager un espace libre L=L₀=L₂+L₁ entre les extrémités de la branche externe 3₁ et de la conduite externe 1a, permettant d'avoir accès à la zone de soudure pour effectuer l'assemblage de la seconde pièce forgée sur l'extrémité de ladite conduite interne, ladite soudure 1a₁ étant effectuée de manière connue depuis l'extérieur. Après le soudage et les opérations de contrôle, le chauffage est supprimé, puis la conduite interne, en se refroidissant, se rétracte et l'espace de valeur L tend vers 0. La seconde pièce forgée 2b vient alors en contact avec l'enveloppe externe 1a au niveau de sa périphérie et peut être ainsi soudée de manière connue depuis l'extérieur en 1a₁.

Pour la clarté des dessins, on a représenté un manchon faisant office de gabarit positionneur 5 de la seconde pièce forgée 2b sur la conduite interne 1a, seulement sur les figures 3A, 4A et 4C, mais ce dispositif connu de l'homme de l'art est nécessaire dans tous les cas pour maintenir en position ladite seconde pièce forgée pendant toute la durée du processus de soudage.

Sur la figure 3B, on a représenté une alternative d'expansion thermique de la conduite interne basée sur l'utilisation d'un générateur d'air chaud 4, ou d'un simple brûleur à gaz ou à mazout, alimenté depuis l'une des extrémités, par exemple depuis la seconde extrémité du PiP, par une conduite 4a.

Sur la figure 3C, on a représenté un mode d'expansion basé sur une traction mécanique de la conduite interne effectuée à l'aide d'un treuil 8 extérieur à la conduite, relié par un câble 8a à un mandrin 6 à coins autobloquants 6a situé à l'intérieur de la conduite externe et venant se bloquer contre la paroi interne 2₃ de ladite conduite interne, dans une zone proche de l'extrémité de ladite conduite interne, par exemple à 1m de ladite extrémité. L'enveloppe externe 1a du PiP est fermement maintenue par un dispositif de blocage 7 fixé au sol, assurant une compression radiale de ladite conduite externe au niveau de la surface externe 2₅ de sa deuxième extrémité. Le treuil 8 est alors mis en tension et lorsque l'espace L=L₀ recherché est atteint, ledit treuil est bloqué et l'opération de soudage de la seconde pièce forgée 2b sur l'extrémité de la conduite interne est réalisée de manière précédemment décrite depuis l'extérieur.

Un dispositif de traction similaire basé sur l'utilisation de vérins hydrauliques 13 sera développé plus avant dans la description, dans une version préférée de l'invention.

Dans toutes ces méthodes décrites, le mode conventionnel de soudage utilisé, connu de l'homme de l'art sous le nom de soudage orbital, utilise un dispositif de soudage, de type collier de guidage, installé sur la conduite, sur lequel se déplace un chariot portant la ou les têtes de soudage, le soudage s'effectuant alors sur une conduite fixe par rapport au sol, lesdites têtes de soudage tournant autour de ladite conduite. Dans ce mode de soudage, le maintient du bain de soudure nécessite de faire varier de nombreux paramètres de soudage pour tenir compte de la zone en cours de soudage. En effet la partie supérieure de la conduite est extrêmement simple à souder, car le bain de soudure se tient naturellement, alors que en sous-face, le bain aurait tendance à couler et s'effondrer, les parties latérales et obliques présentant des difficultés complémentaires de niveaux variables. Ainsi, pour un tel type de soudage, les paramètres principaux de soudage, intensité, tension, fréquence, vitesse linéaire de la tête et du fil d'apport, etc., sont modifiés en temps réel en fonction de la position de ladite torche de soudage en rotation autour de la conduite.

Dans les figures 4A-4F, on illustre un mode préféré de l'invention, dans lequel la tête de soudage 9 reste fixe par rapport au sol, de préférence à la verticale sur le dessus de la conduite, la longueur complète de conduite reposant sur des roulettes ou vireurs 10 est alors mise en rotation contrôlée par l'intermédiaire d'un vireur motorisé 10a pour effectuer l'opération de soudage dans les meilleurs conditions opérationnelles de maintient du bain de soudage.

Sur la figure 4A on a représenté le soudage de la seconde pièce forgée 2b sur la conduite interne 1b, l'expansion thermique étant assurée par les cartouches chauffantes 3 précédemment décrites en regard de la figure 3A.

Sur la figure 4B, en fin de soudage de la seconde pièce forgée sur la conduite interne 1b, le chauffage est arrêté et la conduite interne s'est rétractée, autorisant ainsi le soudage de la branche externe de la seconde pièce forgée 2b sur la seconde extrémité de l'enveloppe externe à l'aide d'une même tête de soudage 9, après repositionnement de cette dernière au droit du cordon de soudure circulaire 1a₁ à réaliser.

Sur la figure 4C, on a détaillé le dispositif selon l'invention utilisant un treuil de traction 8 tel que décrit en regard de la figure 3c. Pour que la rotation de la rame puisse s'effectuer librement, le dispositif comporte un premier corps périphérique 11 disposé par-dessus la surface externe 2₅ de la conduite externe, fixe par rapport au sol, coopérant par l'intermédiaire d'un premier palier 11a avec un collier à coins bloquants 11b venant comprimer la surface externe de la conduite externe, empêchant tout mouvement de translation de la rame 1 selon l'axe XX' vers la gauche, tout en autorisant sa rotation autour dudit axe XX'. Ledit premier palier 11a est constitué, par exemple, d'un roulement à rouleaux croisés à l'intérieur d'une première cage extérieure 11a₁ solidaire dudit corps périphérique 11 et d'une cage intérieure 11a₂ solidaire dudit collier à coins 11b. Le câble de traction 8a est relié au mandrin autobloquant 6 par l'intermédiaire d'un dispositif de type émerillon 6b qui autorise une rotation du mandrin 6 autour de l'axe longitudinal XX'. Le processus d'expansion de la conduite interne 1b reste similaire au processus précédemment décrit en regard de la figure 3C, et le processus de soudage reste alors identique à celui décrit en regard des figures 4A-4B, la rotation de la rame étant assurée par une motorisation, non représentée, intégrée au premier corps périphérique 11 ou par motorisation 10a d'un vireur 10.

Sur la figure 4D on a détaillé un dispositif utilisant des vérins hydrauliques 13 pour effectuer l'expansion de la conduite interne 1b, et permettant aussi de faire tourner la rame, donc d'utiliser une tête de soudage 9 en position fixe à la verticale, au dessus de la conduite à souder.

Le premier corps périphérique 11, le premier palier 11a et le collier à coins autobloquants 11b solidaires de la rame, ainsi que la motorisation 11a permettant de contrôler la rotation de la rame, sont identiques à celui décrit en regard de la figure 4C. Un tirant 12c, constitué d'un câble ou d'une barre rigide, voire d'un vérin, relie le mandrin autobloquant 6 à un second palier 12a, constitué par exemple d'un roulement à rouleaux croisés, par l'intermédiaire d'un support 12b solidaire du tirant 12c. Le second palier 12a est constitué d'un roulement à rouleaux croisés intégré dans et entre une cage intérieure 12a₂ solidaire dudit support 12b et une cage extérieure 12a₁ solidaire d'un deuxième corps périphérique 12 appliqué par-dessus la surface externe de la conduite interne et supportant au moins deux vérins hydrauliques 13 disposés diamétralement opposés par rapport à l'axe XX', en l'espèce 6 vérins hydrauliques répartis régulièrement, circulairement, comme représentés sur la figure 4f. Les pistons 13a desdits vérins 13 sont solidaires de tiges 13b venant en butée en 13c avec le premier corps périphérique 11. Ainsi, en appliquant aux vérins 13 une pression P, le second corps périphérique 12 s'éloigne du premier corps périphérique 11 dans la direction XX', le tirant 12c exerce alors une traction sur la conduite interne par l'intermédiaire du mandrin autobloquant 6. En augmentant progressivement la pression P, la conduite interne 1b s'expanse jusqu'à ce que l'espace entre les extrémités de l'enveloppe externe 1a et la branche externe 3₁ de la pièce forgé, atteigne la valeur L=L₀ nécessaire pour effectuer la soudure de la pièce forgée 2b sur la conduite interne 1b, comme expliqué précédemment. Lesdits premier et second paliers 11a-12a, autorisent la rotation de la rame complète alors que lesdits premier et second corps périphériques 11, 12, ainsi que les tiges 13b des vérins 13 restent fixes par rapport au sol, donc autorisent l'utilisation d'une tête de soudage fixe 9, avantageusement située à la verticale, au dessus de la conduite à souder. Lorsque la soudure 1b₁ de la conduite interne 1b sur la pièce forgée 2b est terminée, la pression dans les vérins est relâchée, la conduite interne se rétracte alors et la pièce forgée vient en contact avec l'enveloppe externe au niveau de sa périphérie, à laquelle elle peut alors être soudée de la même manière.

On a décrit sur les figures 3C et 4C l'utilisation d'un treuil de tensionnement 8, mais on reste dans l'esprit de l'invention en utilisant un vérin solidaire du sol et situé à l'axe XX' de la rame et relié au mandrin autobloquant 6 par l'intermédiaire d'un câble ou d'une barre métallique identique à la barre 12c de la figure 4D.

Dans le cas de PiP devant véhiculer des fluides à très haute température, l'enveloppe externe se trouve en général à la température du fond de la mer, c'est-à-dire 3-5°C, alors que la conduite interne se trouve à la température du fluide, laquelle peut atteindre 120-150°C, voire plus. Ainsi, lors de la fabrication de la rame de PiP, les deux conduites, au repos, sont à une température sensiblement identique (20-30°C par exemple). De même, une fois posées au fond, elles se retrouvent toutes deux à la température du fond de la mer (3-5°C), mais dès que le fluide circule, la température dudit fluide crée une contrainte de compression dans ladite conduite interne 1b, car cette dernière est bloquée à ses extrémités au niveau des pièces forgées. Cette mise en compression selon l'axe XX' risque de créer des instabilités de type flambage latéral dans le plan perpendiculaire à XX', risque que l'on supprime en installant à intervalles réguliers ou non, des centraliseurs 1c qui empêchent l'apparition de tels phénomènes. Mais, ces centraliseurs sont d'un coût élevé, sont délicats à installer et, de plus, créent des ponts thermiques qui réduisent d'autant l'efficacité du système d'isolation et il est avantageux de réduire leur nombre. A cet effet, la conduite interne 1b et l'enveloppe externe 1a étant au repos, à la même température, on ajuste la longueur de la conduite interne de manière à ce qu'elle soit plus courte d'une valeur L₁+e par rapport à la conduite externe, tel que représenté sur la figure 5a. L'expansion de la conduite interne est alors réalisée par l'un des procédés précédemment décrit, les mêmes paramètres thermiques ou d'effort donnant alors une expansion ménageant un espace L=L₀-e entre l'extrémité de la branche externe 3₂ de la pièce et l'extrémité de la conduite externe. Le soudage de la pièce forgée 2b sur la conduite interne 1b est alors effectué comme indiqué précédemment, puis la conduite interne est rétractée. Lorsque la pièce forgée vient en contact avec l'enveloppe externe 1a, la conduite interne présente alors une traction résiduelle proportionnelle à la valeur de e. En pratique, pour une longueur de rame de 50m, L₁ représente 10 à 100 mm et la valeur de e dépendra du point de fonctionnement en température de la conduite. Par exemple, si la conduite est portée à un différentiel de température par rapport à l'eau de mer δT=120°C en cours d'utilisation, on prévoira classiquement des valeurs de e de 35 à 45 mm, ce qui correspond à une contrainte, due à la seule température, nulle pour un différentiel de température δT=60°C, donc à un décalage vers le bas d'environ 50% du niveau de contrainte de compression dans la conduite interne. De la même manière pour δT=180°C, e=55 à 60 mm pour obtenir le même décalage de 50% vers le bas, de la contrainte de compression dans la conduite intérieure.

Ainsi, en cours d'utilisation à haute température, la contrainte de compression de la conduite interne se trouve réduite d'autant, ce qui permet d'augmenter l'espacement des centraliseurs, donc de réduire leur nombre.

Pour effectuer la soudure finale de la seconde pièce forgée 2b sur l'enveloppe externe, on prendra soin de maintenir dans la conduite interne un niveau d'expansion (température ou tension) suffisant pour que la face des deux pièces à souder ne soient pas appuyées l'une contre l'autre de manière significative, de manière à ce que la soudure puisse être effectuée sans contraintes de compression dans la zone de soudage. En fin de processus de soudage, l'expansion (chaleur ou tension) peut alors être complètement relâchée et la conduite intérieure atteint alors le niveau de préhension recherché.

Pour effectuer les opérations de soudage de la seconde pièce forgée sur la conduite interne, en laissant fixe la rame, comme décrit en regard des figures 3A-3B-3C, la distance L doit être de l'ordre de 10 cm pour autoriser le passage des têtes de soudage et des chariots de guidage circulaires, et avoir une bonne visibilité pour le contrôle du processus. Cette valeur d'expansion n'est possible à obtenir qu'avec des rames de longueur suffisante, par exemple 24-36-48m, voire plus, et ne peut être envisagée de manière réaliste sur des longueurs plus courtes car le différentiel de température ou la contrainte de traction serait alors incompatible avec les aciers utilisés.

A titre d'exemple, une rame de type PiP de 50m de long constituée d'une conduite interne de 273,1 mm de diamètre et de 15,88 mm d'épaisseur, et d'une enveloppe externe de 355,6 mm de diamètre et de 19,1 mm d'épaisseur, nécessite une force de traction de 329,5 tonnes pour obtenir un déplacement de l'extrémité de la conduite interne de sorte que L=100mm, 61,1% du déplacement étant obtenu par l'allongement de la conduite interne (en traction), et 38,9% étant obtenu par contraction de l'enveloppe externe (en compression longitudinale).

On reste limité par le fait que la limite élastique de l'acier ne doit pas être dépassé, et pour un acier de qualité X60 selon la norme américaine API-5L, la limite élastique est de 413 MPa, les contraintes respectives de traction dans la conduite interne, et de compression dans l'enveloppe externe sont respectivement de 257MPa et 163MPa soit respectivement 62% et 40% des limites élastiques. Ces valeurs illustrent que si l'on divise par 2 la longueur de la rame (rame de 25 m) ces valeurs doublent pour obtenir l'élongation recherchée (L=100mm), et la contrainte dans la conduite interne devient alors inacceptable, alors qu'elle reste encore acceptable pour l'enveloppe externe.

En utilisant l'expansion thermique de la conduite interne, ou ce qui reviendrait au même, mais serait beaucoup plus compliqué à réaliser, le refroidissement cryogénique de l'enveloppe externe, on obtient une expansion à relativement basse température.

A titre d'exemple, la même conduite interne de 273,1 mm de diamètre et de 15,88 mm d'épaisseur soumise à une variation de température de 192,3° sur une longueur de 40 m présente une expansion thermique L de 100 mm.

Pour un fonctionnement de la conduite interne avec une température différentielle de δT=120°C par rapport à l'eau de mer, on fabriquera avantageusement le PiP avec une valeur de e=39 mm, ce qui correspond une précontrainte de traction de 100.15 MPa dans la conduite intérieure lorsque le PiP est hors service, ce qui représente 24.3% de la limite élastique, à une contrainte nulle lorsque le différentiel de température est de δT=60°C, et une contrainte de compression de 100.15 MPa lorsque le différentiel de température est maximum δT=120°C. Ladite contrainte de traction initiale au repos correspond alors à une pré tension de 128.5 tonnes. En augmentant la valeur de e, on diminue le niveau de contrainte maximale de compression dans la conduite intérieure à la température maximale de fonctionnement. Ces valeurs ne sont données qu'à titre illustratif de l'intérêt de l'invention et ne sont qu'approchées, car le calcul exact des contraintes internes au PiP en fonctionnement doit aussi prendre en compte les effets de la pression interne du fluide circulant, ainsi que les effets de la pression au niveau du fond de la mer qui est approximativement de 10MPa, soit environ 100bars par tranche de 1000m. Ainsi, en fonction des divers paramètres de fonctionnement du PiP (pression de service, température, profondeur d'eau, ...), on sera amené à considérer des valeurs de e adaptées aux conditions de service, donc à décaler vers le bas la contrainte maximale de compression dans la conduite intérieure d'un pourcentage adapté à chacun des cas rencontrés.

Au cas où le système d'isolation pré installé entre les deux conduites présente une limite supérieure à ne pas dépasser, par exemple 120°C, on effectuera avantageusement une expansion mixte, dans laquelle une partie de l'expansion est produite de manière thermique, le solde étant effectué à l'aide d'un des moyens de traction précédemment décrit. Ce dispositif mixte est aussi avantageux sur le plan sécurité, car il permet d'éviter aux opérateurs de travailler à proximité d'éléments mécaniques sous efforts de tension considérables, les dites tensions étant de l'ordre de 300-500 tonnes et pouvant même atteindre 1000 tonnes voire plus dans le cas de très grosses conduites de type PiP.

Dans le cas où l'on utilise une tête de soudage fixe et où l'on fait tourner la rame, comme décrit en regard des figures 4A-4B-4C-4D, l'espace nécessaire au seul passage de la tête est beaucoup plus réduit et peut dans certains cas être limité à 5-6 cm, ce qui réduit d'autant les efforts nécessaires, ou l'ampleur des effets thermiques nécessaires pour atteindre le résultat.

L'expansion thermique présente un avantage de sécurité, car il n'implique pas de travailler à proximité d'éléments sous fortes contraintes mécaniques. Par contre, la mise en température et le refroidissement de la conduite interne nécessitent une certaine durée qui réduit d'autant les cadences de production.

L'expansion mécanique nécessite des efforts considérables qui atteignent plusieurs centaines de tonnes et implique des moyens de sécurité adaptés. En revanche, la mise en tension et le relâchement de ladite tension sont effectués dans des temps très courts de l'ordre de quelques minutes.

Selon une autre variante de réalisation de l'invention, on installe à quelques mètres des extrémités de la conduite intérieure, des bouchons obturateurs, communément appelés « packers », permettant ainsi de remplir intégralement d'eau ladite conduite intérieure, puis de la mettre sous pression pour obtenir l'allongement de ladite conduite intérieure. A titre d'exemple, dans le cas de PiP détaillé précédemment, l'expansion sous le seul effet de fond de la conduite intérieure pour une pression de 300 bars est d'environ 32.6mm pour une dite rame de longueur 50 m. Toutefois, ce mode d'expansion n'est intéressant que pour de très longues rames (75-100m), car la valeur de L reste faible pour des rames de 50m.

Selon une variante de réalisation de l'invention, on utilise lesdits packers pour réaliser au sein de la conduite intérieure un volume étanche dans lequel on fait circuler de l'eau chaude, l'eau chaude provenant par exemple d'un réservoir calorifugé et maintenu à la température désirée. Ainsi, en début de cycle, après installation des packers, ledit volume est rempli par de l'eau déjà chaude et est maintenue à la température voulu par simple circulation, l'apport de calories étant effectué de préférence au sein du réservoir calorifugé. En fin de cycle, on récupère l'eau chaude que l'on renvoie vers ledit réservoir calorifugé, en attente du prochain cycle. Ce mode de chauffage est avantageusement couplé à un mode de traction mécanique pour atteindre un niveau d'expansion plus élevé.

## Revendications

1. Elément de conduites coaxiales (1) comprenant une conduite interne (1b) et une conduite externe (1a) avec un espace annulaire (1d), de préférence rempli d'un matériau d'isolation (1e), et à chaque extrémité une pièce de fermeture étanche dudit espace annulaire constituée chacune par une pièce de jonction de révolution forgée (2a, 2b) constituée chacune d'un seul bloc, destinée à la jonction de deux dits éléments de conduites coaxiales (1) bout à bout, chaque dite pièce de jonction (2a, 2b) comportant au moins deux premières branches de révolution (3₁, 3₂) dont une première branche de révolution interne (3₂) soudée directement à une extrémité de ladite conduite interne avec un cordon de soudure circulaire (1b₁) et une première branche externe (3₁) soudée directement à l'extrémité de ladite conduite externe avec un cordon de soudure circulaire (1a₁), lesdites premières branches internes de révolution (3₂) étant plus longues par rapport aux dites premières branches externes (3₁) d'une longueur L₁ dans la direction longitudinale axiale (XX') dudit élément de conduites coaxiales, chaque dite pièce de jonction à chaque extrémité dudit élément de conduite étant destinée à être assemblée, d'un côté aux extrémités desdites conduites externe et interne dudit élément de conduite coaxiale, et du côté opposé, directement à une autre dite pièce de jonction, elle-même assemblée par soudage à l'extrémité d'un autre élément unitaire de conduite coaxiale **caractérisé en ce que** tous lesdits cordons de soudure circulaires (1a₁, 1b₁) sont déposés du coté extérieur des conduites interne et externe.

2. Elément de conduites coaxiales selon la revendication 1, **caractérisé en ce que** ladite conduite interne (1b) est soumise à une contrainte de traction exercée par chaque dite pièce de jonction à chaque extrémité, lorsque ledit élément de conduite coaxiale est hors service.

3. Elément de conduites coaxiales selon la revendication 2, **caractérisé en ce que** ladite conduite interne (1b) est soumise à une traction correspondant à une contrainte de traction inférieure à 90%, de préférence de 5 à 75% de la limite élastique de l'acier constituant ladite conduite interne, lorsque ledit élément de conduites coaxiales est hors service .

4. Elément de conduites coaxiales selon l'une des revendications 1 à 3, **caractérisé en ce qu'**il est destiné à l'assemblage de conduites sous-marines en acier et présente une longueur de 10 à 100 m, de préférence de 20 à 50 m.

5. Elément de conduites coaxiales selon l'une des revendications précédentes, **caractérisé en ce que** lesdites premières branches interne (3₂) et externe (3₁) desdites pièces forgées de révolution (2a, 2b) sont sensiblement de même épaisseur respectivement que lesdites conduites interne (1b) et externe (1b) à leurs extrémités.

6. Elément de conduites coaxiales selon l'une des revendications précédentes, **caractérisé en ce que** ledit élément de conduites comporte à chaque extrémité une dite pièce forgée (2a, 2b) délimitée comme suit :
dans une direction radiale par rapport à un axe longitudinal XX' de révolution de ladite pièce, elle est délimitée par une paroi interne cylindrique (2₂) sensiblement de même diamètre que celui de la partie courante de ladite conduite interne (1b), et par une paroi externe (2₁) cylindrique de diamètre sensiblement égal au diamètre externe de la partie courante de ladite conduite externe (1a), et
dans la direction axiale longitudinale XX',
• du côté de ladite pièce de jonction destinée à être assemblée par soudage à l'extrémité desdites conduites externe et interne d'un dit élément de conduites coaxiales; lesdites parois externe (2₁) et interne (2₂) de ladite pièce de jonction forment en section longitudinale des premières branches respectivement externe (3₁) et interne (3₂) sensiblement de même épaisseur que lesdites conduites externe (1a) et interne (1b) auxquelles elles sont destinées à être assemblées, lesdites premières branches externe (3₁) et interne (3₂) délimitant une première cavité annulaire (4₁) et
• du côté opposé de ladite pièce de jonction destinée à être assemblée à une autre dite pièce de jonction, elle-même assemblée par soudage à l'extrémité d'un autre élément d'ensemble de conduites coaxiales, lesdites parois externe (2₁) et interne (2₂) forment en section longitudinale des deuxièmes branches respectivement externe (5₁) et interne (5₂), délimitant une deuxième cavité annulaire (6₁),
• les fonds desdites première et deuxième cavités (4₁, 6₁) étant espacés dans ladite direction longitudinale XX', de manière à délimiter une zone pleine de ladite pièce de jonction dans laquelle lesdites parois externe (3₁) et interne (3₂) forment les faces externe et interne d'une même paroi cylindrique.

7. Elément de conduites coaxiales selon l'une des revendications 1 à 6, **caractérisé en ce que** le matériau isolant (1e) est un matériau microporeux ou nanoporeux, de préférence un aérogel, se présentant, de préférence encore, sous forme de grains de 0,5 à 5 mm de diamètre.

8. Elément de conduites coaxiales selon la revendication 6, **caractérisé en ce que**
- l'extrémité libre de ladite deuxième branche externe (5₁) présente une forme, de préférence un chanfrein (18), la rendant apte à être soudée, depuis l'extérieur de la conduite, à l'extrémité libre d'une autre dite deuxième branche externe d'une autre pièce de jonction à laquelle elle est destinée à être assemblée, ladite autre pièce de jonction étant, elle-même, assemblée à l'extrémité d'un deuxième dit élément d'ensemble de deux conduites coaxiales, et
- l'extrémité libre de ladite deuxième branche interne (5₂) présente une forme la destinant à buter en contact sans lui être soudée avec l'extrémité libre d'une autre dite deuxième branche interne d'une autre dite pièce de jonction assemblée à l'extrémité d'un dit deuxième élément d'ensemble de conduites coaxiales, et
- les extrémités libres des dites deuxièmes branche externe (5₁) et branche interne (5₂) d'une même pièce de jonction arrivent sensiblement au même niveau dans ladite direction longitudinale (XX'), et
- les deux dites deuxièmes branches externes des deux dites pièces de jonction destinées à être assemblées par soudure étant de même épaisseur, supérieure à l'épaisseur de ladite conduite externe, et de préférence supérieure à l'épaisseur de ladite deuxième branche interne de ladite pièce de jonction.

9. Ensemble d'au moins deux conduites coaxiales constituées de l'assemblage d'au moins deux éléments de conduites coaxiales selon l'une des revendications 1 à 8, **caractérisé en ce qu'**il comprend au moins deux dits éléments d'ensemble de conduites coaxiales selon l'une des revendications 1 à 8, comprenant chacun, à au moins une extrémité, une dite pièce de jonction assemblée par soudage à une pièce de jonction de l'autre dit élément d'ensemble de conduites coaxiales, les deux dites pièces de jonction étant soudées l'une à l'autre uniquement au niveau dé l'extrémité desdites deuxièmes branches externes (5₁), les extrémités desdites deux branches internes (5₂) non soudées venant buter en contact l'une avec l'autre lors de l'assemblage des deux dites pièces de jonction, de sorte que lesdites deuxièmes cavités internes (6₁) ne sont pas étanches vis-à-vis de l'intérieur de ladite paroi interne et de ladite conduite interne.

10. Procédé de fabrication d'un élément de conduites coaxiales (1) comprenant une conduite interne (1a) et une conduite externe (1b) et comportant à chacune de ses extrémités une pièce de jonction forgée de révolution (2a, 2b), chaque dite pièce de jonction forgée (2a, 2b) comportant au moins deux premières branches de révolution, dont une première branche interne (3₂) et une première branche externe (3₁), l'extrémité cylindrique de ladite première branche externe (3₁) étant en retrait d'une longueur L₁ par rapport à l'extrémité cylindrique de ladite première branche interne (3₂), procédé dans lequel on réalise les étapes successives suivantes dans lesquelles :
1/ on soude l'extrémité cylindrique de ladite première branche interne (3₂) d'une première pièce de jonction (2a), avec une première extrémité de ladite conduite interne (1b) non recouverte par la conduite externe (1a), la soudure étant réalisée depuis l'extérieure de ladite conduite interne, et
2/ on déplace ladite conduite externe (1a) co-axialement autour de ladite conduite interne, de manière à ce qu'une première extrémité de ladite conduite externe arrive bout à bout avec l'extrémité correspondante de la première branche externe (3₁) de ladite première pièce de jonction, la seconde extrémité de ladite conduite interne étant en retrait par rapport à la seconde extrémité correspondante de ladite conduite externe d'une longueur L₃ au moins égale à L₁, et
3/ on soude l'extrémité de ladite première branche externe (3₁) de ladite première pièce de jonction forgée (2a) avec l'extrémité de ladite conduite externe (1a), depuis l'extérieur de ladite conduite externe,
procédé **caractérisé en ce que** l'on réalise les étapes ultérieures successives suivantes dans lesquelles :
4/ on expanse de manière réversible, dans la direction longitudinale axiale (XX'), ladite seconde extrémité de ladite conduite interne (1b), de manière à ce que celle-ci dépasse d'une longueur L₂ par rapport à ladite seconde extrémité correspondante de ladite conduite externe (1a), et
5/ on soude depuis l'extérieur de ladite conduite interne (1b), l'extrémité de la première branche interne (3₂) d'une deuxième dite pièce forgée (2b) avec ladite seconde extrémité de ladite conduite interne (1b) en position expansée, et
6/ on résorbe au moins partiellement l'expansion de ladite conduite interne jusqu'à ce que ladite seconde extrémité de ladite première branche externe (3₁) de ladite deuxième pièce forgée (2b) arrive bout à bout avec ladite seconde extrémité de ladite conduite externe (1a) et
7/ on soude depuis l'extérieur de ladite conduite externe, l'extrémité de ladite première branche externe (3₁) de ladite deuxième pièce forgée (2b) avec ladite seconde extrémité de ladite conduite externe.

11. Procédé selon la revendication 10, **caractérisé en ce que :**
- à l'étape 2/, ladite seconde extrémité de la conduite externe (1a) du coté destiné à être raccordé à ladite deuxième pièce de jonction forgée (2b), est ajustée de manière à dépasser de ladite seconde extrémité correspondante de la conduite interne d'une longueur L₃=L₁+e, , et
- à l'étape 4/, on réalise une expansion de ladite conduite interne d'une longueur L₂ supérieure ou égale à L,+e, de sorte que, à l'étape 6/, on résorbe partiellement ladite expansion et à l'issue du soudage de l'étape 7/, ladite conduite interne (1b) se trouve soumise à une traction correspondant à un allongement résiduel inférieur ou égal à e.

12. Procédé l'une des revendications 10 ou 11, **caractérisé en ce que,** à l'étape 4/, on réalise l'expansion de ladite conduite interne par chauffage de celle-ci, de préférence à l'aide de dispositifs de chauffage (3, 4) que l'on introduit et, de préférence que l'on déplace à l'intérieur de ladite conduite interne et que l'on fait agir de manière uniforme ou non le long de ladite conduite, à l'intérieur de celle-ci.

13. Procédé selon l'une des revendications 10 à 12, **caractérisé en ce que,** à l'étape 4/, on réalise ladite expansion par traction longitudinale (XX') mécanique de ladite conduite interne à l'aide d'un dispositif de traction (8, 13) comprenant un treuil (8) ou un vérin (13) disposé à l'extérieur de ladite conduite interne.

14. Procédé selon la revendication 13, **caractérisé en ce que**, à l'étape 4/, ladite expansion se fait par traction longitudinale de ladite conduite interne et compression longitudinale simultanée de ladite conduite externe au niveau de leurs dites secondes extrémités.

15. Procédé selon l'une des revendications 10 à 14, **caractérisé en ce que** l'on réalise ledit soudage avec un dispositif comprenant une tête de soudage fixe (9), de préférence à la verticale au-dessus dudit élément de conduites (1), et on fait tourner ledit élément de conduites (1) sur lui-même autour de son axe longitudinal (XX').

16. Procédé selon la revendication 15, **caractérisé en ce que** ledit dispositif de traction (8, 13) comprend ou coopère avec :
- des moyens de blocage de ladite conduite interne (6-6a-6b), permettant ainsi une translation longitudinale de ladite conduite interne en expansion lorsque le dispositif de traction est actionné, et autorisant la rotation de ladite conduite interne autour de son axe longitudinal (XX') le cas échéant, et
- des moyens de blocage de ladite conduite externe (11a-11b,11), empêchant tout mouvement de translation longitudinale de ladite conduite externe, et autorisant sa rotation autour de son axe longitudinal (XX').

17. Procédé selon la revendication 16, **caractérisé en ce que** lesdits moyens de blocage de la conduite externe, comprennent :
- un premier dispositif de blocage par compression radiale (11b) disposé fixement autour de ladite conduite externe tel qu'un collier à coins bloquant (11a), et
- un premier corps périphérique (11) fixe par rapport au sol, coopérant avec ledit premier dispositif de blocage (11b) par l'intermédiaire d'un premier palier (11a) autorisant la rotation de ladite conduite externe selon son axe longitudinal (XX').

18. Procédé selon la revendication 17, **caractérisé en ce que** ledit premier palier (11a) comprend des roulements à rouleaux croisés (11c), dans et entre une cage intérieure (11a₂) solidaire dudit collier (11b), et une cage extérieure (11a₁) solidaire dudit premier corps périphérique fixe (11).

19. Procédé selon l'une des revendications 16 à 18, **caractérisé en ce que** ledit dispositif de traction comprend ou coopère avec au moins un tirant (12c), constitué d'un câble ou d'une tige rigide, apte à être déplacé en translation longitudinale (XX') par treuil (8) ou un vérin (13), relié à un deuxième dispositif de blocage (6-6a-6b) de ladite conduite interne par compression radiale de la paroi interne (2₂) de ladite conduite interne, disposé à l'intérieur de ladite conduite interne, tel qu'un mandrin autobloquant.

20. Procédé selon la revendication 19, **caractérisé en ce que** ledit dispositif de traction comprend au moins deux vérins (13) diamétralement opposés, de préférence au moins quatre vérins (13) régulièrement répartis circulairement, dont les pistons (13a) solidaires de tiges (13b) viennent en butée (13c) avec ledit premier corps périphérique fixe (11) support dudit premier palier (11a), lesdits vérins étant reliés au dit tirant (12c) par l'intermédiaire d'un second palier (12a), constitué de préférence d'un roulement à rouleaux croisés, comportant un second corps périphérique fixe par rapport au sol (12) supportant lesdits vérins (13, apte à coopérer avec un support (12b) solidaire dudit tirant (12c), de sorte qu'en appliquant aux vérins (13) une pression (P), le tirant (12c) exerce une traction sur la conduite interne, tout en autorisant la rotation dudit élément de conduites autour de son axe longitudinal (XX'), lesdits premier et second corps périphériques (11, 12) ainsi que les tiges (13b) des vérins (13) restant fixes par rapport au sol, autorisant ainsi l'utilisation d'une tête de soudage fixe (9).

21. Procédé selon l'une des revendications 10 à 20, **caractérisé en ce que** l'on réalise la fabrication d'un élément de conduites coaxiales selon l'une des revendications 1 à 8.

## Claims

1. A coaxial pipe element (1) comprising an inner pipe (1b) and an outer pipe (1a) with an annular space (1d), preferably filled with an insulating material (1e), and at each end a sealed closure of said annular space, each closure being constituted by a junction forging (2a, 2b) in the form of a body of revolution, each constituted as a single block for joining two of said coaxial pipe elements (1) together, end to end, each of said junction forgings (2a, 2b) comprising at least two first cylindrical branches (3₁, 3₂), in which an inner first cylindrical branch (3₂) is welded directly to one end of said inner pipe with a circular weld bead (1b₁) and an outer first branch (3₁) is welded directly to the end of said outer pipe with a circular weld bead (1a₁), said inner first circular branches (3₂) being longer than said outer first branches (3₁) by a length L₁ in the axial longitudinal direction (XX') of said coaxial pipe element, each of said junction forgings at each end of said pipe element being designed to be assembled at one end to the ends of said outer and inner pipes of said axial pipe element, and at an opposite end directly to another said junction forging, itself assembled by welding to the end of another unit coaxial pipe element, the element being **characterized in that** all of said circular weld beads (1a₁, 1b₁) are located on the outside of the inner and outer pipes.

2. A coaxial pipe element according to claim 1, **characterized in that** said inner pipe (1b) is subjected to traction stress exerted by each of said junction forging at each end when said coaxial pipe element is not in service.

3. A coaxial pipe element according to claim 2, **characterized in that**, when said coaxial pipe element is not in service, said inner pipe (1b) is subjected to traction corresponding to traction stress that is less than 90%, preferably less than 5% to 75%, of the elastic limit of the steel constituting said inner pipe.

4. A coaxial pipe element according to any one of claims 1 to 3, **characterized in that** it is designed for use in assembling steel undersea pipes, and presents a length lying in the range 10 m to 100 m, and preferably in the range 20 m to 50 m.

5. A coaxial pipe element according to any preceding claim, **characterized in that** said inner and outer first branches (3₂, 3₁) of said cylindrical forgings (2a, 2b) are respectively of substantially the same thicknesses as said inner (1b) and outer (1a) pipes, at their ends.

6. A coaxial pipe element according to any preceding claims, **characterized in that** said pipe element includes at each end a said forging (2a, 2b) defined as follows:
in a radial direction relative to a longitudinal axis XX' of revolution of said forging, it is defined by a cylindrical internal wall (2₂) having substantially the same diameter as the main portion of said inner pipe (1b), and by a cylindrical outer wall (2₁) of diameter substantially equal to the outer diameter of the main portion of said outer pipe (1a); and
in the longitudinal axial direction XX',
· at the end of said junction forging that is to be assembled by welding to the ends of said outer and inner pipes of a said coaxial pipe element, said outer (2₁) and inner (2₂) walls of said junction forging form, in longitudinal section, respective outer (3₁) and inner (3₂) first branches that are substantially of the same thicknesses as said outer (1a) and inner (1b) pipes to which they are to be assembled, said outer (3₁) and inner (3₂) first branches defining a first annular cavity (4₁); and
· the opposite end of said junction forging that is to be assembled to another said junction forging, itself assembled by welding to the end of another coaxial pipe assembly element, said outer (2₁) and inner (2₂) walls forming, in longitudinal section, respective outer (5₁) and inner (5₂) second branches defining a second annular cavity (6₁);
· the ends of said first and second cavities (4₁, 6₁) being spaced apart in said longitudinal direction XX' so as to define a solid zone of said junction forging in which said outer (3₁) and inner (3₂) walls form the outer and inner faces of a single cylindrical wall.

7. A coaxial pipe element according to any one of claims 1 to 6, **characterized in that** the insulating material (1e) is a microporous or nanoporous material, preferably an aerogel, more preferably in the form of grains having a diameter lying in the range 0.5 mm to 5 mm.

8. A coaxial pipe element according to claim 6, **characterized in that:**
· the free end of said outer second branch (5₁) presents a shape, preferably a chamfer shape (18), making it suitable for being welded from outside the pipe to the free end of another said outer second branch of another junction forging to which it is to be assembled, said other junction forging itself being assembled to the end of a second said assembly element comprising two coaxial pipes; and
· the free end of said inner second branch (5₂) is of a shape enabling it to make contact in abutment against the free end of another said inner second branch of another said junction forging assembled to the end of a said second coaxial pipe assembly element, without being welded thereto; and
· the free ends of said outer (5₁) and inner (5₂) second branches of a single junction forging coming to substantially the same level in said longitudinal direction (XX'); and
· said two outer second branches of said two junction forgings that are to be assembled together by welding having the same thickness greater than the thickness of said outer pipe, and preferably greater than the thickness of said inner second branch of said junction forging.

9. An assembly of at least two coaxial pipes constituted by assembling together at least two coaxial pipe elements according to any one of claims 1 to 8, the assembly being **characterized in that** it comprises at least two of said coaxial pipe assembly elements according to any one of claims 1 to 8, each including, at at least one end, a said junction forging assembled by welding to a junction forging of the other said coaxial pipe assembly element, said two junction forgings being welded to each other solely via the ends of said outer second branches (5₁), the non-welded ends of said two inner branches (5₂) coming into abutting contact against each other during assembly of said two junction forgings, such that said second inner cavities (6₁) are not sealed from the inside of said inner wall and said inner pipe.

10. A method of fabricating a coaxial pipe element (1) comprising an inner pipe (1a) and an outer pipe (1b), and including at each of its ends a junction forging (2a, 2b) in the form of a body of revolution, each said junction forging (2a, 2b) having at least two first cylindrical branches, including an inner first branch (3₂) and an outer first branch (3₁), the cylindrical end of said outer first branch (3₁) being set back by a length L₁ from the cylindrical end of said inner first branch (3₂), in which method, the following successive steps are performed:
1) welding the cylindrical end of said inner first branch (3₂) of a first junction forging (2a) to a first end of said inner pipe (1b) that is not covered by the outer pipe (1a), welding being performed from the outside of said inner pipe; and
2) moving said outer pipe (1a) coaxially around said inner pipe so that a first end of said outer pipe makes end-to-end contact with the corresponding end of the outer first branch (3₁) of said first junction forging, the second end of said inner pipe being set back from the corresponding second end of said outer pipe by a length L₃ that is not less than L₁; and
3) welding the end of said outer first branch (3₁) of said first junction forging (2a) to the end of said outer pipe (1a), from the outside of said outer pipe;
which method is **characterized in that** the following successive steps are performed:
4) reversibly expanding along the axial longitudinal direction (XX') said second end of said inner pipe (1b) so that it projects by a length L₂ from said corresponding second end of said outer pipe (1a); and
5) from the outside of said inner pipe (1b), while said inner pipe (1b) is in the expanded position, welding said second end of said inner pipe (1b) to the end of the inner first branch (3₂) of a second said forging (2b); and
6) resorbing at least part of the expansion of said inner second pipe until said second end of said outer first branch (3₁) of said second forging (2b) comes end-to-end with said second end of said outer pipe (1a); and
7) from the outside of said outer pipe, welding the end of said outer first branch (3₁) of said second forging (2b) to said second end of said outer pipe.

11. A method according to claim 10, **characterized in that:**
· in step 2), said second end of the outer pipe (1a) at its end for connection to said second forging (2b) is adjusted so as to project beyond said corresponding second end of the inner pipe by a length L₃=L₁+e; and
· in step 4), said inner pipe is expanded by a length L₂ greater than or equal to L₁+e, such that in step 6), part of said expansion is resorbed, and at the end of the welding in step 7), said inner pipe (1b) is subjected to traction corresponding to residual elongation less than or equal to e.

12. A method according to claim 10 or claim 11, **characterized in that**, in step 4), said inner pipe is expanded by being heated, preferably with the help of heater devices (3, 4) that are inserted and preferably moved inside said inner pipe, and that are caused to operate in optionally uniform manner along the inside of said pipe.

13. A method according to any one of claims 10 to 12, **characterized in that**, in step 4), said expansion is performed by applying mechanical traction (XX') to said inner pipe with the help of a traction device (8, 13) comprising a winch (8) or an actuator (13) placed outside said inner pipe.

14. A method according to claim 13, **characterized in that,** in step 4), said expansion is performed by applying longitudinal traction to said inner pipe and simultaneous longitudinal compression to said outer pipe via their said second ends.

15. A method according to any one of clams 10 to 14, **characterized in that** said welding is performed with a device comprising a stationary welder head (9), preferably vertically above said pipe element (1), and said pipe element (1) is caused to rotate about its longitudinal axis (XX').

16. A method according to claim 15, **characterized in that** said traction device (8, 13) comprises or co-operates with:
· means for blocking said inner pipe (6, 6a, 6b), thus enabling said inner pipe to be caused to move in longitudinal translation in expansion when the traction device is actuated, while allowing said inner pipe to rotate about its longitudinal axis (XX') where appropriate; and
· means for blocking said outer pipe (11a, 11b, 11), preventing any movement in longitudinal translation of said outer pipe, and allowing it to rotate about its longitudinal axis (XX').

17. A method according to claim 16, **characterized in that** said means for blocking the outer pipe comprise:
· a first device (11b) for blocking by radial compression that is disposed in stationary manner around said outer pipe, such as a blocking wedge collar (11a); and
· a first peripheral body (11) that is stationary relative to the ground, co-operating with said first blocking device (11b) via a first bearing (11a) allowing said outer pipe to rotate about its longitudinal axis (XX').

18. A method according to claim 17, **characterized in that** said first bearing (11a) comprises crossed roller bearings (11c) in and between an inner cage (11a₂) secured to said collar (11b) and an outer cage (11a₁) secured to said stationary first peripheral body (11).

19. A method according to any one of claims 16 to 18, **characterized in that** said traction device comprises or co-operates with at least one tie member (12c) constituted by a rigid rod or a cable, suitable for being moved in longitudinal translation (XX') by a winch (8) or an actuator (13) connected to a second blocking device (6, 6a, 6b) for blocking said inner pipe by applying radial compression to the inner wall (2₂) of said inner pipe, disposed inside said inner pipe, such as a self-locking mandrel.

20. A method according to claim 19, **characterized in that** said traction device comprises at least two diametrically-opposite actuators (13), preferably at least four actuators (13) that are regularly distributed circularly, having pistons (13a) secured to rods (13b) that come into abutment (13c) against said stationary first peripheral body (11) supporting said first bearing (11a), said actuators being connected to said tie member (12c) via a second bearing (12a), preferably constituted by a crossed roller bearing, comprising a second peripheral body that is stationary relative to the ground (12) supporting said actuators (13), suitable for co-operating with a support (12b) secured to said tie member (12c), such that by applying pressure (P) to said actuators (13), the tie member (12c) exerts traction on the inner pipe while allowing said pipe element to rotate about its longitudinal axis (XX'), said first and second peripheral bodies (11, 12) and the rods (13b) of the actuators (13) remaining stationary relative to the ground, thus enabling a stationary welder head (9) to be used.

21. A method according to any one of claims 10 to 20, **characterized in that** it is used to fabricate a coaxial pipe element according to any one of claims 1 to 8.

## Patentansprüche

1. Element aus koaxialen Leitungen (1), das eine interne Leitung (1 b) und eine externe Leitung (1a) mit einem Ringraum (1d) aufweist, der vorzugsweise mit einem Isoliermaterial (1e) gefüllt ist, und an jedem Ende einen dichten Verschlußteil des Ringraums, der jeweils aus einem geschmiedeten Drehungsverbindungsteil (2a, 2b) besteht, der jeweils aus einem einzigen Stück gebildet und zum Verbinden Ende an Ende von zwei Elementen aus koaxialen Leitungen (1) bestimmt ist, wobei jeder Verbindungsteil (2a, 2b) mindestens zwei erste Drehungszweige (3₁, 3₂) aufweist, von welchen ein erster interner Drehungszweig (3₂), direkt mit einer kreisförmigen Schweißnaht (1b₁) an ein Ende der internen Leitung geschweißt ist, und ein erster externer Zweig (3₁) mit einer kreisförmigen Schweißnaht (1a₁) direkt an das Ende der externen Leitung geschweißt ist, wobei die ersten internen Drehungszweige (3₂) im Vergleich zu den ersten externen Zweigen (3₁) um eine Länge L₁ in die axiale Längsrichtung (XX') des Elements aus koaxialen Leitungen länger sind, wobei jeder Verbindungsteil an jedem Ende des Leitungselements dazu bestimmt ist, auf einer Seite mit den Enden der externen und der internen Leitung des koaxialen Leitungselements zusammengefügt zu werden, und auf der entgegengesetzten Seite direkt mit einem anderen Verbindungsteil, der selbst durch Schweißen an das Ende eines anderen einzelnen koaxialen Leitungselements durch Schweißen angebaut ist, **dadurch gekennzeichnet, daß** alle kreisförmigen Schweißnähte (1a₁, 1 b₁) auf der Außenseite der internen und der externen Leitung aufgebracht sind.

2. Element aus koaxialen Leitungen nach Anspruch 1, **dadurch gekennzeichnet, daß** die interne Leitung (1 b) einer Zugspannung ausgesetzt ist, die von jedem Verbindungsteil an jedem Ende ausgeübt wird, wenn das koaxiale Leitungselement außer Betrieb ist.

3. Element aus koaxialen Leitungen nach Anspruch 2, **dadurch gekennzeichnet, daß** die interne Leitung (1 b) einem Zug ausgesetzt ist, der einer Zugspannung kleiner als 90 %, vorzugsweise von 5 bis 75 % der Streckgrenze des Stahls, der die interne Leitung bildet, entspricht, wenn das Element aus koaxialen Leitungen außer Betrieb ist.

4. Element aus koaxialen Leitungen nach einem der Ansprüche 1 bis 3, **dadurch gekennzeichnet, daß** es zum Zusammenfügen von Unterseeleitungen aus Stahl bestimmt ist und eine Länge von 10 bis 100 m, vorzugsweise 20 bis 50 m aufweist.

5. Element aus koaxialen Leitungen nach einem der vorhergehenden Ansprüche, **dadurch gekennzeichnet, daß** der erste interne Zweig (3₂) und der erste externe Zweig (3₁) der geschmiedeten Drehungsteile (2a, 2b) im wesentlichen jeweils die gleiche Stärke haben wie die interne Leitung (1 b) und die externe Leitung (1 b) an ihren Enden.

6. Element aus koaxialen Leitungen nach einem der vorhergehenden Ansprüche, **dadurch gekennzeichnet, daß** das Element aus Leitungen an jedem Ende einen geschmiedeten Teil (2a, 2b) aufweist, der wie folgt abgegrenzt ist:
in eine radiale Richtung in bezug zu der Längsdrehungsachse XX' des Teils ist es von einer zylindrischen Innenwand (2₂) mit im wesentlichen dem gleichen Durchmesser wie der des laufenden Teils der internen Leitung (1b) abgegrenzt, und von einer zylindrischen Außenwand (2₁) mit im wesentlichen dem gleichen Durchmesser wie der Außendurchmesser des laufenden Teils der externen Leitung (1 a), und
in die axiale Längsrichtung XX',
- auf der Seite des Verbindungsteils, der dazu bestimmt ist, durch Schweißen mit dem Ende der externen und der internen Leitung eines Element aus koaxialen Leitungen zusammengebaut zu werden, bilden die externe (2₁) und die interne Wand (2₂) des Verbindungsteils im Längsquerschnitt einen jeweiligen externen (3₁) und internen (3₂) Zweig mit im wesentlichen gleicher Stärke wie die externe Leitung (1a) und die interne Leitung (1b), mit welchen sie zusammengebaut werden sollen, wobei der erste externe Zweig (3₁) und der erste interne Zweig (3₂) einen ersten ringförmigen Hohlraum (4₁) abgrenzen, und
- auf der entgegengesetzten Seite des Verbindungsteils, der dazu bestimmt ist, mit einem anderen Verbindungsteil zusammengefügt zu werden, der selbst durch Schweißen mit dem Ende eines anderen Elements einer Einheit aus koaxialen Leitungen zusammengefügt ist, bilden die externe Wand (2₁) und die interne Wand (2₂) im Längsquerschnitt zweite Zweige, jeweils einen externen (5₁) und einen internen (5₂), die einen zweiten ringförmigen Hohlraum (6₁) abgrenzen,
- wobei die Böden des ersten und des zweiten Hohlraum (4₁, 6₁) in die Längsrichtung XX' derart beabstandet sind, daß sie eine massive Zone des Verbindungsteils abgrenzen, in der die externe Wand (3₁) und die interne Wand (3₂) eine externe und eine interne Fläche einer gleichen zylindrischen Wand bilden.

7. Element aus koaxialen Leitungen nach einem der Ansprüche 1 bis 6, **dadurch gekennzeichnet, daß** das isolierende Material (1 e) ein mikroporiges oder nanoporiges Material ist, vorzugsweise ein fester poröser Stoff, der wieder vorzugsweise die Form von Körnern zu 0,5 bis 5 mm Durchmesser aufweist.

8. Element aus koaxialen Leitungen nach Anspruch 6, **dadurch gekennzeichnet, daß**
- das freie Ende des zweiten externen Zweigs (5₁) eine Form aufweist, vorzugsweise eine Abfasung (18), die es zum Schweißen von der Außenseite der Leitung her an das freie Ende eines anderen zweiten externen Zweigs eines anderen Verbindungsteils, mit dem er zusammengebaut werden soll, geeignet macht, wobei der Verbindungsteil selbst mit dem Ende eines zweiten Elements aus einer Einheit aus zwei koaxialen Leitungen zusammengebaut ist, und
- das freie Ende des zweiten internen Zweigs (5₂) eine Form aufweist, die dazu bestimmt ist, in Berührung und ohne damit verschweißt zu werden, an das freie Ende eines anderen zweiten internen Zweigs eines anderen Verbindungsteils anzuschlagen, der mit dem Ende eines zweiten Elements aus einer Einheit aus koaxialen Leitungen zusammengebaut ist, und
- die freien Enden des zweiten externen Zweigs (5₁) und zweiten internen Zweigs (5₂) eines gleichen Verbindungsteils im wesentlichen auf dem gleichen Niveau in die Längsrichtung (XX') ankommen, und
- die zwei zweiten äußeren Zweige der zwei Verbindungsteile, die dazu bestimmt sind, durch Schweißen zusammengebaut zu werden, die gleiche Stärke haben, die größer ist als die Stärke der externen Leitung, und vorzugsweise größer als die Stärke des zweiten internen Zweigs des Verbindungsteils.

9. Einheit aus mindestens zwei koaxialen Leitungen, die aus dem Zusammenbauen von mindestens zwei Elementen aus koaxialen Leitungen nach einem der Ansprüche 1 bis 8 besteht, **dadurch gekennzeichnet, daß** sie mindestens zwei Elemente einer Einheit aus koaxialen Leitungen nach einem der Ansprüche 1 bis 8 aufweist, die jeweils an mindestens einem Ende einen Verbindungsteil aufweisen, der durch Schweißen mit einem Verbindungsteil des anderen Elements aus einer Einheit aus koaxialen Leitungen zusammengebaut ist, wobei die zwei Verbindungsteile miteinander nur auf dem Niveau des Endes der zwei externen Zweige (5₁) geschweißt sind, wobei die Enden der zwei internen Zweige (5₂), die nicht geschweißt sind, beim Zusammenbauen der zwei Verbindungsteile in Berührung miteinander derart zum Anschlagen kommen, daß die zweiten internen Hohlräume (6₁) gegenüber dem Inneren der internen Wand und der internen Leitung nicht dicht sind.

10. Verfahren zum Herstellen eines Elements aus koaxialen Leitungen (1), das eine interne Leitung (1a) und eine externe Leitung (1b) und an jedem seiner Enden einen geschmiedeten Drehungsverbindungsteil (2a, 2b) aufweist, wobei jeder geschmiedete Verbindungsteil (2a, 2b) mindestens zwei erste Drehungszweige aufweist, darunter ein erster interner Zweig (3₂) und ein erster externer Zweig (3₁), wobei das zylindrische Ende des ersten externen Zweigs (3₁) um eine Länge L₁ in bezug auf das zylindrische Ende des ersten internen Zweigs (3₂) in Rücksprung ist, Verfahren, bei dem man nacheinander die folgenden Schritte ausführt, bei welchen:
1) man das zylindrische Ende des ersten internen Zweig (3₂) eines ersten Verbindungsteils (2a) mit einem ersten Ende der internen Leitung (1b), das von der externen Leitung (1a) nicht abgedeckt ist, schweißt, wobei das Schweißen von außerhalb der internen Leitung her ausgeführt wird,
2) man die externe Leitung (1a) koaxial um die interne Leitung derart verlagert, daß ein erstes Ende der externen Leitung Ende an Ende mit dem entsprechenden Ende des ersten externen Zweigs (3₁) des ersten Verbindungsteils kommt, wobei das zweite Ende der internen Leitung in bezug zu dem entsprechenden zweiten Ende der externen Leitung um eine Länge L₃, die mindestens gleich L₁ ist, in Rücksprung ist, und
3) man das Ende des ersten externen Zweigs (3₁) des ersten geschmiedeten Verbindungsteils (2a) mit der externen Leitung (1a) von außerhalb der externen Leitung her schweißt,
Verfahren **dadurch gekennzeichnet, daß** man nacheinander die späteren folgenden Schritte ausführt, bei welchen:
4) man umkehrbar das zweite Ende der internen Leitung (1b) in die axiale Längsrichtung (XX') derart expandiert, daß diese um eine Länge L₂ in bezug auf das entsprechende zweite Ende der externen Leitung (1a) hinausgeht, und
5) man von außen her die interne Leitung (1b), das Ende des ersten internen Zweigs (3₂) eines zweiten geschmiedeten Teils (2b) mit dem zweiten Ende der internen Leitung (1b) in expandierter Position zusammenschweißt, und
6) man die Expansion der internen Leitung mindestens zum Teil resorbiert, bis das zweite Ende des ersten externen Zweigs (3₁) des zweiten geschmiedeten Teils (2b) Ende an Ende mit dem zweiten Ende der externen Leitung (1 a) kommt, und
7) man von außerhalb der externen Leitung her das Ende des ersten externen Zweigs (3₁) des zweiten geschmiedeten Teils (2b) mit dem zweiten Ende der externen Leitung zusammenschweißt.

11. Verfahren nach Anspruch 10, **dadurch gekennzeichnet, daß:**
- im Schritt 2 das zweite Ende der externen Leitung (1a) auf der Seite, die dazu bestimmt ist, an den zweiten geschmiedeten Verbindungsteil (2b) angeschlossen zu werden, derart angepaßt wird, daß es das entsprechende zweite Ende der internen Leitung um eine Länge L₃ = L₁ + e überschreitet, und
- man im Schritt 4 eine Expansion der internen Leitung um eine Länge L₂, die größer oder gleich der Länge L₁ + e ist, derart herstellt, daß man im Schritt 6 die Expansion teilweise resorbiert und daß nach dem Schweißen des Schritts 7 die interne Leitung (1b) einem Zug ausgesetzt ist, der einer restlichen Dehnung kleiner oder gleich e entspricht.

12. Verfahren nach einem der Ansprüche 10 oder 11, **dadurch gekennzeichnet, daß** man im Schritt 4 die Expansion der internen Leitung durch Erhitzen dieser, vorzugsweise mit Hilfe von Heizvorrichtungen (3, 4) ausführt, die man einführt, und die man vorzugsweise im Inneren der internen Leitung verlagert, und daß man sie entlang der Leitung, im Inneren dieser, gleichförmig oder nicht wirken läßt.

13. Verfahren nach einem der Ansprüche 10 bis 12, **dadurch gekennzeichnet, daß** man im Schritt 4 die Expansion durch mechanischen Längszug (XX') der internen Leitung mit Hilfe einer Zugvorrichtung (8, 13) ausführt, die eine Winde (8) oder einen Zylinder (13) aufweist, die/der außerhalb der internen Leitung angeordnet ist.

14. Verfahren nach Anspruch 13, **dadurch gekennzeichnet, daß** die Expansion im Schritt 4 durch Längszug der internen Leitung und gleichzeitiges Längskomprimieren der externen Leitung auf dem Niveau ihrer zweiten Enden erfolgt.

15. Verfahren nach einem der Ansprüche 10 bis 14, **dadurch gekennzeichnet, daß** man das Schweißen mit einer Vorrichtung ausführt, die einen stationären Schweißkopf (9) aufweist, vorzugsweise senkrecht oberhalb des Elements aus Leitungen (1), und daß man das Element aus Leitungen (1) um seine Längsachse (XX') um sich selbst drehen läßt.

16. Verfahren nach Anspruch 15, **dadurch gekennzeichnet, daß** die Zugvorrichtung (8, 13) Folgendes aufweist oder mit Folgendem zusammenwirkt:
- Mittel zum Blockieren der internen Leitung (6-6a-6b), die daher eine Längsverschiebung der internen Leitung in Expansion erlauben, wenn die Zugvorrichtung betätigt wird, und gegebenenfalls das Drehen der internen Leitung um ihre Längsachse (XX') erlauben, und
- Mittel zum Blockieren der externen Leitung (11a-11b-11), die jede Längsverschiebungsbewegung der externen Leitung verhindern und ihr Drehen um ihre Längsachse (XX') erlauben.

17. Verfahren nach Anspruch 16, **dadurch gekennzeichnet, daß** die Mittel zum Blockieren der externen Leitung Folgendes aufweisen:
- eine erste Vorrichtung zum Blockieren durch radiales Komprimieren (11 b), die stationär um die externe Leitung wie eine Schelle mit blockierenden Ecken (11a) angeordnet ist, und
- einen ersten umfänglichen Körper (11), der in bezug zum Boden stationär ist, der mit der ersten Blockiervorrichtung (11b) über ein erstes Lager (11a) zusammenwirkt, das das Drehen der externen Leitung gemäß ihrer Längsachse (XX') erlaubt.

18. Verfahren nach Anspruch 17, **dadurch gekennzeichnet, daß** das erste Lager (11a) Kreuzrollenlager (11c) in und zwischen einem inneren Käfig (11a₂), der fest mit der Schelle (11 b) verbunden ist, und einem zweiten externen Käfig (11a₁), der fest mit dem ersten stationären umfänglichen Körper (11) verbunden ist, aufweist.

19. Verfahren nach einem der Ansprüche 16 bis 18, **dadurch gekennzeichnet, daß** die Zugvorrichtung mindestens einen Zugstab (12c) aufweist oder mit diesem zusammenarbeitet, der aus einem Kabel oder einem starren Schaft besteht, das/der in Längsverschiebung (XX') durch eine Winde (8) oder einen Zylinder (13), die/der mit einer zweiten Blockiervorrichtung (6-6a-6b) der internen Leitung durch radiales Komprimieren der Innenwand (2₂) der internen Leitung, die im Inneren der internen Leitung angeordnet ist, wie zum Beispiel ein selbst blockierender Dorn, verbunden ist, bewegt werden kann.

20. Verfahren nach Anspruch 19, **dadurch gekennzeichnet, daß** die Zugvorrichtung mindestens zwei einander diametral entgegen gesetzte Zylinder (13) aufweist, vorzugsweise mindestens vier Zylinder (13), die im Kreis regelmäßig verteilt sind, deren Kolben (13a), die fest mit Schäften (13b) verbunden sind, mit dem ersten stationären umfänglichen Körper (11), der das erste Lager (11a) trägt, zum Anschlagen (13c) kommen, wobei die Zylinder mit dem Zugstab (12c) über ein zweites Lager (12a) verbunden sind, das vorzugsweise aus einem Kreuzrollenlager besteht, das einen zweiten in bezug zum Boden (12), der die Zylinder (13) trägt, stationären umfänglichen Körper aufweist, der mit einem Träger (12b), der fest mit dem Zugstab (12c) verbunden ist, zusammenwirken kann, so daß durch Anlegen einer Kraft (P) auf die Zylinder (13) der Zugstab (12c) einen Zug auf die interne Leitung ausübt und gleichzeitig das Drehen des Elements aus Leitungen um seine Längsachse (XX') erlaubt, wobei der erste und der zweite umfängliche Körper (11, 12) sowie die Schäfte (13b) der Zylinder (13) in bezug zu dem Boden stationär bleiben und daher den Gebrauch eines stationären Schweißkopfs (9) erlauben.

21. Verfahren nach einem der Ansprüche 10 bis 20, **dadurch gekennzeichnet, daß** man das Herstellen eines Elements aus koaxialen Leitungen nach einem der Ansprüche 1 bis 8 ausführt.
